# EUROPÄISCHE PATENTANMELDUNG

(11) **EP 3 683 512 A1**
(43) Veröffentlichungstag der Anmeldung: **22.07.2020**
(21) Anmeldenummer: 19152872.8
(22) Anmeldetag: 21.01.2019
(51) Int. Cl.: F24F 11/72, F24F 11/74, F24F 110/50, F24F 11/00, F24F 110/40, F24F 110/70

(54) **REGELUNGSEINHEIT FÜR EINE LÜFTUNGSANLAGE, VORZUGSWEISE FÜR EINE KONTROLLIERTE WOHNRAUMLÜFTUNGSANLAGE**

(71) Anmelder: Möhlenhoff GmbH, 38229 Salzgitter (DE)
(72) Erfinder: SALGE, Immo, 38104 Braunschweig (DE)
(74) Vertreter: Holz, Christian

(57) **Zusammenfassung**

Die vorliegende Erfindung betrifft eine Regelungseinheit (10) für eine Lüftungsanlage (0), vorzugsweise für eine KWL-Anlage (0), welche ausgebildet ist zu erhalten
• einen Soll-Wert des Luftdrucks einer Hauptzuluftleitung (3) und/oder einer Hauptabluftleitung (6),
• einen Ist-Wert des Luftdrucks der Hauptzuluftleitung (3) und/oder der Hauptabluftleitung (6),
• einen ersten Soll-Wert einer Luftbelastung eines ersten Raums (14a; 15a) oder einer ersten Raumzone und
• einen ersten Ist-Wert der Luftbelastung des ersten Raums (14a; 15a) oder der ersten Raumzone,
mit einem ersten Luftdruckregler (23a), welcher ausgebildet ist, basierend auf dem Soll-Wert des Luftdrucks und dem Ist-Wert des Luftdrucks eine erste Luftdruckstellgröße zu erzeugen, mit einem ersten Luftbelastungsführungsregler (25a), welcher ausgebildet ist, basierend auf dem ersten Soll-Wert der Luftbelastung und der ersten Luftdruckstellgröße eine erste Luftbelastungsstellgröße zu erzeugen, und mit einem ersten Luftbelastungsregler (27a), welcher ausgebildet ist, basierend auf der ersten Luftbelastungsstellgröße und dem ersten Ist-Wert der Luftbelastung eine erste Druckstellgröße des ersten Raums (14a; 15a) oder der ersten Raumzone zu erzeugen, wobei die Luftbelastung vorzugsweise eine CO2-Konzentration oder eine Luftfeuchtigkeit ist, wobei der Luftdruck vorzugsweise ein Differenzluftdruck ist.

## Beschreibung

Die vorliegende Erfindung betrifft eine Regelungseinheit für eine Lüftungsanlage, vorzugsweise für eine KWL-Anlage, gemäß dem Patentanspruch 1, ein Verfahren zum Betreiben einer derartigen Regelungseinheit gemäß dem Patentanspruch 8, eine Lüftungsanlage mit einer derartigen Regelungseinheit gemäß dem Patentanspruch 10, eine weitere Lüftungsanlage mit einer derartigen Regelungseinheit gemäß dem Patentanspruch 12, ein Verfahren zum Betreiben derartiger Lüftungsanlagen gemäß dem Patentanspruch 14 sowie ein Computerprogrammprodukt mit einem Programmcode zur Ausführung eines derartigen Verfahrens gemäß dem Patentanspruch 16.

Es ist üblich bzw. erforderlich, das Innere von Gebäuden mit Umgebungsluft zu belüften sowie verbrauchte bzw. verunreinigte sowie feuchte Luft aus dem Inneren von Gebäuden an die Umgebung abzuführen. Dies kann z.B. für die Zufuhr von Sauerstoff bzw. für die Abfuhr von Kohlenstoffdioxid (CO₂) für den Menschen ebenso wie z.B. für die Abfuhr von Gerüchen, Feuchtigkeit, Wärme und dergleichen gelten, um das Raumklima im Inneren des Gebäudes zu verbessern sowie um z.B. Schimmel im Inneren des Gebäudes zu vermeiden.

Hierzu können Fenster, Türen und dergleichen zur Umgebung kurzzeitig als sog. Stoßlüften oder über einen längeren Zeitraum geöffnet bzw. gekippt werden. Diese Art der "freien" Lüftung kann als unkontrollierte Wohnraumlüftung bezeichnet werden. Hierzu gehören auch die Fugenlüftung oder die Schachtlüftung. Nachteilig hierbei ist, dass Wärme aus dem Inneren des Gebäudes zusammen mit der Abluft an die Umgebung abgeführt wird und somit für die Nutzung im Gebäudeinneren verlorengeht. Dies ist aus Gründen der Energieeffizienz und des Klimaschutzes heutzutage unerwünscht.

Daher werden zunehmend Anlagen zur kontrollierten Wohnraumlüftung (KWL) eingesetzt, welche auch als KWL-Anlagen abgekürzt werden können. Eine KWL-Anlage ist eine Lüftungsanlage zur definierten Be- und Entlüftung des Inneren eines Gebäudes wie z.B. Wohnungen, Einfamilienhäuser, Zweifamilienhäuser, Mehrfamilienhäuser und dergleichen. Das Grundprinzip einer KWL-Anlage ist, dass Luft von außerhalb des Gebäudes, d.h. Umgebungsluft, mittels eines Zuluftventilators eines zentralen Lüftungsgeräts über eine Hauptzuluftleitung in das Innere des Gebäudes eingesogen und innerhalb des Gebäudes über Teilzuluftleitungen in die Räume wie z.B. Wohn- und Schlafbereiche als Zuluft eingebracht wird. Diese Räume können als Zulufträume bezeichnet werden. Die Leitungen können auch als Kanäle bezeichnet werden.

Über Überströmöffnungen kann die Luft z.B. über einen Flur des Gebäudes in Räume wie beispielsweise die Küche, das Bad und das WC gelangen. Diese Räume können als Ablufträume bezeichnet werden. Die als Abluft bezeichnete Luft wird dann über Teilabluftleitungen einer gemeinsamen Hauptabluftleitung zugeführt. Die Hauptabluftleitung führt die Abluft dem zentralen Lüftungsgerät zu, welches die Abluft mittels einem Abluftventilator nach außerhalb des Gebäudes leiten kann.

Das Lüftungsgerät kann einen Wärmetauscher aufweisen, über den der Abluft Wärme entzogen und der Zuluft zugeführt werden kann, so dass ein Luftaustausch zwischen der Umgebung und dem Inneren des Gebäudes erfolgen jedoch die Wärme der Abluft zumindest teilweise im Gebäude zurückgehalten werden kann. Hierdurch kann z.B. Sauerstoff in das Gebäudeinnere gelangen sowie z.B. Kohlenstoffdioxid, Gerüche und Feuchtigkeit nach Außen an die Umgebung abgeführt werden, ohne dass gleichzeitig die Wärme des Gebäudeinneren vollständig verloren gehen muss. Derartige Lüftungssysteme können als KWL-Anlagen mit Wärmerückgewinnung bezeichnet werden.

Zu beachten ist bei derartigen KWL-Anlagen, dass die Luftwechselraten, d.h. das Maß für den Zuluftvolumenstrom der Raumluft bezogen auf das Bauvolumen von Gebäuden, primär zum Schutz der Gebäude vor zu hoher Luftfeuchtigkeit ausgelegt sind um z.B. Schimmel im Inneren des Gebäudes zu vermeiden. Der Bedarf an Zuluft für Personen wird je nach Auslegungsverfahren der KWL-Anlage häufig anteilig auf die Gesamtfläche des Gebäudes verteilt.

Es kann jedoch zu einem erhöhten Bedarf an Zuluft in bestimmten Räumen des Gebäudes dadurch kommen, dass sich Personen z.B. zu unterschiedlichen Tageszeiten wie z.B. zum Schlafen in einem Raum aufhalten oder nicht. Auch können Räume wie z.B. die Küche oder das Badezimmer nur zu bestimmten Zeiten genutzt werden. Ferner können sich z.B. aufgrund eines Besuches von Gästen mehr Personen und bzw. oder über einen längeren Zeitraum als üblich in einem Raum wie z.B. dem Wohnzimmer aufhalten. Zur Verbesserung der Luftqualität kann somit eine Erhöhung der Luftwechselrate in diesem Raum zu einem bestimmten Zeitpunkt bzw. über eine gewisse Zeitdauer erforderlich sein. Mit anderen Worten ist in diesem Fall mehr Zuluft als üblich diesem Raum zuzuführen bzw. mehr Abluft als üblich aus diesem Raum abzuführen.

Dies kann durch einen erhöhten Volumenstrom der Zuluft zu diesem Raum hin erreicht werden. Hierzu sind KWL-Anlagen bekannt, welche z.B. mittels eines CO₂-Sensors pro Raum eine erhöhte CO₂-Belastung des Raums erfassen können. Mittels einer Regelungs- und Steuereinheit der zentralen Lüftungsanlage kann dies zu einer erhöhten Zufuhr von Zuluft in diesen Raum mittels eines entsprechenden Luftvolumenstroms führen, um die erhöhte CO₂-Belastung dieses Raums auszugleichen und wieder normale CO₂-Werten zu erreichen. Dies gilt entsprechend für die Erfassung z.B. einer erhöhten Luftfeuchtigkeit in einem Abluftraum.

Derartige KWL-Anlagen sind als KWL-Anlagen mit bedarfsgesteuerter Luftvolumenregulierung bekannt. Hier können zwei Arten von KWL-Analgen unterschieden werden. Am Markt verbreitet sind KWL-Anlagen, die den Gesamtvolumenstrom bedarfsgerecht steuern. Wesentlich effektiver sind jedoch KWL-Anlagen, die den Luftvolumenstrom raumweise nach dem Bedarf steuern. Sie erhöhen nur den Volumenstrom in dem Raum, in dem eine erhöhte Belastung auftritt. Dieser Anlagentyp verfügt über Stellorgane pro Raum zur raumweisen bedarfsgerechten Luftvolumenregulierung.

Die Stellorgane pro Raum einer derartigen KWL-Anlage mit bedarfsgesteuerter Luftvolumenregulierung sind sogenannte Volumenstromregler zur stetigen Regelung des Luftvolumenstroms pro Raum bzw. pro Teilzuluftleitung bzw. Teilabluftleitung. Die einzelnen Volumenstromregler stehen in Datenverbindung zum zentralen Lüftungsgerät bzw. zu dessen Regelungs- und Steuereinheit. Diese Volumenstromregler weisen jeweils ein Drosselelement auf, welches mit einem stufenlos verstellbaren Antrieb betätigt werden kann. Weiter verfügt ein Volumenstromregler über eine Messeinrichtung zur Erfassung des aktuell fließenden Luftvolumenstroms. Ferner ist ein elektronischer Regler enthalten, der aus einem Ist-Wert des Luftvolumenstroms als Regelgröße und einem Soll-Wert des Luftvolumenstroms als Führungsgröße die Stellgröße für den stetigen Antrieb erzeugen kann. Der Soll-Wert des Luftvolumenstroms resultiert aus der Stellgröße der Regelung der CO₂-Belastung bzw. der Luftfeuchtigkeit des Raums.

Zu beachten ist hierbei, dass zur Vermeidung ungewollter Über- oder Unterdrücke im Gebäude bzw. dessen Räumen die Summe der einzelnen Zuluftvolumenströme und die Summe der einzelnen Abluftvolumenströme in einem einregulierten Verhältnis zueinander bleiben müssen. Dies gilt auch für KWL-Anlagen mit bedarfsgesteuerter Luftvolumenregulierung. Muss beispielhaft der Volumenstrom für Zuluft in einem Raum für anwesende Personen erhöht werden, muss im Gesamtsystem der Lüftungsanlage ein Ausgleich für diese Erhöhung des einzelnen Volumenstroms vorgenommen werden. Auch dieses Erfordernis kann zu einem zusätzlichen Aufwand führen, welcher derartige KWL-Anlage mit bedarfsgesteuerter Luftvolumenregulierung für kleinere Gebäude unattraktiv machen kann.

Der Ausgleich dieser Erhöhung des Volumenstroms auf der Zuluftseite kann durch zwei verschiedene Maßnahmen erreicht werden: entweder durch anteilige Erhöhung der einzelnen Volumenströme auf der Abluftseite oder durch anteilige Verringerung der restlichen einzelnen Volumenströme auf der Zuluftseite. Beide Maßnahmen können üblicherweise durch den Einsatz von stetig angesteuerten Volumenstromreglern, durch die Bilanzierung der Einzelvolumenströme und durch die Steuerung der Ventilatordrehzahlen des Zuluftventilators und des Abluftventilators durch eine zentrale Regelungs- und Steuereinheit der Lüftungsanlage umgesetzt werden. Dies erfordert jedoch einen entsprechend hohen Aufwand an Sensoren und Verkabelung sowie einen entsprechend hohen Regelungsaufwand der Volumenstromregler und der Regeleinheit der Lüftungsanlage. Auch aus diesen Gründen kann eine bedarfsgesteuerter Luftvolumenregulierung für kleinere Gebäude unattraktiv sein.

Eine deutliche Vereinfachung und Kostenreduktion bietet der Ersatz eines Volumenstromreglers mit Volumenstrom-Istwert-Erfassung und elektronischer Regelung gegen eine einfache Luftdrossel mit stetigem Antrieb. Reglungsverfahren dieser Art werden in der DE 10 2008 057 787 B3 beschrieben. So beschreibt die DE 10 2008 057 787 B3 eine raumlufttechnische Anlage, die mindestens einen Zuluftkanal und mindestens einen Abluftkanal aufweist. Von diesen zentralen Kanälen zweigen jeweils weitere Kanäle, Raumzuluftkanäle oder Raumabluftkanäle, in verschiedene zu klimatisierende Räume oder Raumzonen ab. Die Luftzufuhr wird über einen Zuluftventilator gewährleistet. An den jeweiligen Zu- und Abluftauslässen befinden sich steuerbare Drosselklappen, die in ihrem Öffnungsquerschnitt veränderbar sind. Der Öffnungsgrad der Drosselklappen wird über einen Sensor für die Raumlast wie z.B. nach dem CO₂-Gehalt oder nach dem Grad der Luftfeuchtigkeit eingestellt. Zur Vermeidung von Unter- oder Überdruck im Raum wird die Abluftklappe in Abhängigkeit eines sensorisch erfassten Differenzdrucks zwischen dem Raumdruck und dem Umgebungsdruck eingestellt und damit der Abluftvolumenstrom dem Zuluftvolumenstrom angepasst.

Diese Ausführung ist vorteilhaft, da durch die Verwendung des jeweiligen Raumdrucks als direkte Führungsgröße die Anlagengestaltung deutlich vereinfacht ist. In herkömmlichen Anlagen wird die Führungsgröße Raumdruck in eine Führungsgröße Volumenstrom umgerechnet. Dabei ist pro Raum Sensorik sowohl zur Erfassung einer ersten Führungsgröße, dem Raumdruck, sowie zur Regelung der zweiten Führungsgröße, dem Volumenstrom, notwendig. Durch die Regelvorrichtung der raumlufttechnischen Anlage der DE 10 2008 057 787 B3 wird die herkömmliche Ausgestaltung deutlich vereinfacht, da wartungsintensive Volumenstromregler durch steuerbare Drosselklappen ersetzt werden. Dadurch ist die Lösung der DE 10 2008 057 787 B3 sowohl weniger kosten- als auch weniger wartungsintensiv.

Nachteilig ist bei der raumtechnischen Lüftungsanlage der DE 10 2008 057 787 B3 jedoch, dass in jedem Raum ein Raumdrucksensor erforderlich ist, um die Druckregelung ausführen zu können. Dies stellt weiterhin einen nicht unerheblichen sensorischen sowie regelungstechnischen Aufwand dar, welcher sich in Anschaffungs- und Montagekosten sowie im Platzbedarf widerspiegelt. Auch ist eine Datenverbindung der einzelnen Komponenten zum zentralen Lüftungsgerät bzw. dessen Regelungs- und Steuerungseinheit erforderlich, da bei diesem Lösungsansatz eine Drehzahlsteuerung des Zuluftventilators des Lüftungsgeräts erforderlich ist.

Eine Aufgabe der Erfindung ist es, eine Lüftungsanlage bzw. eine Regelungseinheit für eine Lüftungsanlage der eingangs beschriebenen Art mit vereinfachtem Aufbau bereit zu stellen. Insbesondere soll die Erfassung der erforderlichen Parameter vereinfacht und bzw. oder reduziert werden. Zusätzlich oder alternativ soll das Regelungskonzept der Lüftungsanlage bzw. dessen Regelungseinheit vereinfacht werden. Zusätzlich oder alternativ soll die Regelungseinheit bei einer bestehenden Lüftungsanlage, vorzugsweise möglichst einfach, nachgerüstet werden können. Zumindest soll eine Alternative zu bekannten derartigen Lüftungsanlagen bzw. Regelungseinheiten bereitgestellt werden.

Die Aufgabe wird erfindungsgemäß durch eine Regelungseinheit mit den Merkmalen des Patentanspruchs 1, durch ein Verfahren mit den Merkmalen des Patentanspruchs 8, durch eine Lüftungsanlage mit den Merkmalen des Patentanspruchs 10, durch eine Lüftungsanlage mit den Merkmalen des Patentanspruchs 12, durch ein Verfahren mit den Merkmalen des Patentanspruchs 14 sowie durch ein Computerprogrammprodukt mit den Merkmalen des Patentanspruchs 16 gelöst. Vorteilhafte Weiterbildungen sind in den Unteransprüchen beschrieben.

Somit betrifft die vorliegende Erfindung eine Regelungseinheit für eine Lüftungsanlage, vorzugsweise für eine KWL-Anlage, wie eingangs beschrieben.

Die Regelungseinheit kann als Software oder als Hardware oder als eine Kombination von Hardware- und Software-Komponenten realisiert sein. Die Regelungseinheit kann als Einzelmodul ausgebildet sein und innerhalb einer Lüftungsanlage verwendet werden oder ein Bestandteil einer Einheit oder Baugruppe einer übergeordneten Regelungseinheit einer Lüftungsanlage sein. Auch kann die Regelungseinheit zusätzliche Steuerungsfunktionen aufweisen, so dass die Regelungseinheit auch als Regelungs- und Steuerungseinheit bezeichnet werden kann. Ebenso kann die Regelungseinheit in Bestandteil einer übergeordneten Regelungs- und Steuerungseinheit oder einer Steuerungseinheit einer Lüftungsanlage sein, welche dann als Regelungs- und Steuerungseinheit bezeichnet werden kann.

Die Regelungseinheit ist ausgebildet zu erhalten:
- einen Soll-Wert des Luftdrucks einer Hauptzuluftleitung und bzw. oder einer Hauptabluftleitung,
- einen Ist-Wert des Luftdrucks der Hauptzuluftleitung und bzw. oder der Hauptabluftleitung,
- einen ersten Soll-Wert einer Luftbelastung eines ersten Raums oder einer ersten Raumzone und
- einen ersten Ist-Wert der Luftbelastung des ersten Raums oder der ersten Raumzone.

Die Hauptzuluftleitung kann Zuluft von außerhalb eines Gebäudes in das Innere des Gebäudes einführen. Die Hauptabluft kann Abluft aus dem Inneren des Gebäudes an dessen Umgebung abführen. Innerhalb des Gebäudes kann wenigstens ein erster Raum vorhanden sein, welcher ggfs. in mehrere Raumzonen geteilt sein kann. Auch können mehrere Räume vorhanden sein. Je nachdem, ob der erste Raum Zuluft zugeführt bekommen oder aus dem ersten Raum Ablauf abgeführt werden kann, kann der erste Raum ein Luftraum oder ein Abluftraum sein, wie eingangs beschrieben.

Die Regelungseinheit weist einen ersten Luftdruckregler auf, welcher ausgebildet ist, basierend auf dem Soll-Wert des Luftdrucks und dem Ist-Wert des Luftdrucks eine erste Luftdruckstellgröße zu erzeugen. Der Ist-Wert des Luftdrucks kann sensorisch erfasst werden. Mit anderen Worten wird einem ersten Luftdruckregler der Regelungseinheit ein Soll-Wert des Luftdrucks als Führungsgröße und ein Ist-Wert des Luftdrucks als Regelgröße zugeführt und hieraus eine erste Luftdruckstellgröße als Stellgröße erzeugt.

Vorzugsweise ist der Luftdruck ein Differenzluftdruck. Somit kann der Differenzdruck bzw. die Druckdifferenz zwischen dem Ort des Sensors und einer Umgebung der Lüftungsanlage erfasst und als Luftdruck von der Regelungseinheit verwendet werden. Dies kann die Genauigkeit der Regelungsschritte verbessern, da üblicherweise eine Abweichung auf null wirksamer ausgeregelt werden kann als eine Abweichung zwischen absoluten Werten, welche insbesondere bei Werten des atmosphärischen Drucks vergleichsweise groß zu den zu erwartenden auszuregelnden Abweichungen sein können.

Die Regelungseinheit weist auch einen ersten Luftbelastungsführungsregler auf, welcher ausgebildet ist, basierend auf einem ersten Soll-Wert einer Luftbelastung und der ersten Luftdruckstellgröße eine erste Luftbelastungsstellgröße zu erzeugen. Als Luftbelastung können chemische und physikalische Parameter der Luft betrachtet werden, welche sich direkt oder indirekt sensorisch erfassen lassen können. Dies können vorzugsweise eine CO₂-Konzentration oder eine Luftfeuchtigkeit sein. Auch können dies z.B. eine Partikelmessung oder eine Geruchsmessung sein. Mit anderen Worten wird einem ersten Luftbelastungsführungsregler der Regelungseinheit ein Soll-Wert der Luftbelastung als Führungsgröße und die o.g. erste Luftdruckstellgröße als Regelgröße zugeführt und hieraus eine erste Luftbelastungsstellgröße als Stellgröße erzeugt. Die erste Luftdruckstellgröße entstammt dem o.g. ersten Luftdruckregler und stellt dessen Stellgröße dar.

Die Regelungseinheit weist ferner einen ersten Luftbelastungsregler auf, welcher ausgebildet ist, basierend auf der ersten Luftbelastungsstellgröße und einem ersten Ist-Wert der Luftbelastung eine erste Druckstellgröße des ersten Raums oder der ersten Raumzone zu erzeugen. Mit anderen Worten wird einem ersten Luftbelastungsregler der Regelungseinheit die o.g. erste Luftbelastungsstellgröße als Führungsgröße und ein erster Ist-Wert der Luftbelastung als Regelgröße zugeführt und hieraus eine erste Druckstellgröße als Stellgröße erzeugt. Die erste Luftbelastungsstellgröße entstammt dem o.g. ersten Luftbelastungsführungsregler und stellt dessen Stellgröße dar.

Der erste Luftdruckregler, der erste Luftbelastungsführungsregler und der erste Luftbelastungsregler können vorzugsweise als P-Regler, als PI-Regler oder als PID-Regler ausgebildet sein, um die jeweiligen Eigenschaften und Vorteile dieser Regler-Typen zu dem jeweiligen Regelungszweck zu nutzen.

Die erste Druckstellgröße kann der Ansteuerung eines ersten Drosselelements dienen, welches das Maß der Zuluftzufuhr in den ersten Raum bzw. in die erste Raumzone, d.h. den Luftvolumenstrom der Zuluft, verändern bzw. regulieren kann. Ein derartiges Drosselelement kann vorzugweise einen stetigen Antrieb aufweisen, welcher mittels der ersten Druckstellgröße angesteuert werden kann um ein mechanisches Element des Drosselelements entsprechend zu verstellen. Hierdurch kann eine Veränderung bzw. Regulierung des Luftstroms der Zuluft in den ersten Raum entsprechend der ersten Druckstellgröße erfolgen. Dies gilt ebenso für die Abluft.

Als Luftdruck kann mittels eines entsprechenden Sensors ein absoluter Luftdruck erfasst und der Regelungseinheit als Ist-Wert des Luftdrucks zur Verfügung gestellt werden. Alternativ kann auch eine Druckdifferenz bzw. ein Differenzdruck erfasst und der Regelungseinheit als Ist-Wert des Luftdrucks zur Verfügung gestellt werden. Der Differenzdruck kann vorzugsweise zwischen dem Ort des Sensors des Luftdrucks und einer Umgebung der Lüftungsanlage bestehen. Der Soll-Wert des Luftdrucks ist entsprechend zu wählen.

Der vorliegenden Erfindung liegt dabei die Erkenntnis zugrunde, dass die Aufgabe der Erfindung zumindest teilweise dadurch gelöst werden kann, indem auf die Erfassung des Ist-Werts des Luftdrucks für den ersten Raum bzw. die erste Raumzone verzichtet wird, so dass auf den entsprechenden Sensor bzw. Druckaufnehmer verzichtet werden kann. Auch kann die entsprechende Verkabelung eingespart werden. Dies kann sich insbesondere dann vorteilhaft auswirken, wenn die Regelungseinheit mehrere Räume bzw. Raumzone erfasst, wie weiter unten näher beschrieben werden wird, so dass ein entsprechender Sensor bzw. Druckaufnehmer samt Verkabelung pro Raum eingespart werden kann.

Stattdessen wird erfindungsgemäß der Ist-Wert des Luftdrucks der Hauptzuluftleitung erfasst und der Regelungseinheit zugeführt, falls die Zuluftseite einer Lüftungsanlage geregelt werden soll. Alternativ kann erfindungsgemäß der Ist-Wert des Luftdrucks der Hauptabluftleitung erfasst und der Regelungseinheit zugeführt werden, falls die Abluftseite einer Lüftungsanlage geregelt werden soll. Es können jedoch auch sowohl der Ist-Wert des Luftdrucks der Hauptzuluftleitung und der Ist-Wert des Luftdrucks der Hauptabluftleitung jeweils erfasst und separat der erfindungsgemäßen Regelungseinheit zur Verfügung gestellt werden, um sowohl die Zuluftseite als auch die Abluftseite einer Lüftungsanlage zu regeln. Hierzu sind der erste Luftdruckregler, der erste Luftbelastungsführungsregler sowie der erste Luftbelastungsregler jeweils doppelt vorzusehen, einmal für die Zuluftseite und einmal für die Abluftseite.

In jedem Fall kann erfindungsgemäß der Ist-Wert des Luftdrucks der Hauptzuluftleitung bzw. der Hauptabluftleitung zentral in der Hauptzuluftleitung bzw. in der Hauptabluftleitung sensorisch erfasst und der Regelungseinheit zur Verfügung gestellt werden. Aus dem Abgleich mit dem Soll-Wert des Luftdrucks der Hauptzuluftleitung bzw. der Hauptabluftleitung, welcher für die Hauptzuluftleitung und die Hauptabluftleitung unterschiedlich oder identisch sein kann, kann eine Abweichung des Ist-Werts des tatsächlichen Luftdrucks und des vorgegebenen Soll-Werts des Luftdrucks vom ersten Luftdruckregler erkannt und eine entsprechende erste Luftdruckstellgröße erzeugt werden, welche ggfs. einer Abweichung zwischen dem Ist-Wert des Luftdrucks und dem Soll-Wert des Luftdrucks entgegenwirken kann.

Die erste Luftdruckstellgröße kann nun seitens des ersten Luftbelastungsführungsreglers mit einem Soll-Wert der Raumbelastung des ersten Raums bzw. der ersten Raumzone z.B. in Form eines Grenzwertes einer zulässigen CO₂-Belastung bzw. einer zulässigen Luftfeuchtigkeit verglichen werden. Aus dieser Abweichung kann dann die erste Luftbelastungsstellgröße als Stellgröße des ersten Luftbelastungsführungsreglers resultieren, welche als Führungsgröße des ersten Luftbelastungsreglers fungieren und diesem den Soll-Wert der Raumbelastung des ersten Raums bzw. der ersten Raumzone unter Berücksichtigung der Abweichung zwischen dem Ist-Wert des Luftdrucks und dem Soll-Wert des Luftdrucks der Hauptzuluftleitung bzw. der Hauptabluftleitung zur Verfügung stellen kann.

Seitens des ersten Luftbelastungsreglers kann nunmehr der erste Ist-Wert der Raumbelastung des ersten Raums bzw. der ersten Raumzone mit der auf dem Soll-Wert der Raumbelastung des ersten Raums bzw. der ersten Raumzone beruhenden ersten Luftbelastungsstellgröße verglichen und eine ggfs. bestehende Abweichung ausgeregelt werden.

Dies resultiert in der ersten Druckstellgröße, welche das Maß der Zuluftzufuhr in den ersten Raum bzw. in die erste Raumzone seitens des ersten Drosselelements verändern bzw. regulieren kann. Hierdurch kann eine Regelung des Maß der Zuluftzufuhr in den ersten Raum bzw. in die erste Raumzone in Abhängigkeit einer Abweichung des Luftdrucks der Hauptzuluftleitung bzw. der Hauptabluftleitung sowie in Abhängigkeit einer Abweichung der Raumbelastung erfolgen, um die Raumbelastung auf bzw. unter einem gewünschten Niveau zu halten und gleichzeitig einen vorbestimmten Luftdruck einzuhalten, was aus den eingangs beschriebenen Gründen für eine Lüftungsanlage und insbesondere für eine KWL-Anlage wünschenswert bzw. erforderlich ist. Dies gilt ebenso für die Abluft.

Somit kann wie bei der raumlufttechnischen Anlage der DE 10 2008 057 787 B3 auch bei der Regelungseinheit der Erfindung auf einen stetig ansteuerbaren Volumenstromregler verzichtet werden, was die Vorteile bewirken kann, wie sie in der DE 10 2008 057 787 B3 beschrieben sind.

Über die raumlufttechnische Anlage der DE 10 2008 057 787 B3 hinaus kann erfindungsgemäß durch die Verwendung eines einfachen Drosselelements, insbesondere mit stetigem Antrieb, eine sehr einfache, kostengünstige, robuste und bzw. oder platzsparende Umsetzung einer Veränderung des Maßes der Zuluftzufuhr in den ersten Raum bzw. in die erste Raumzone erfolgen. Dies gilt ebenso für die Abluft.

Auch kann dies, wie bereits erwähnt, im Vergleich z.B. zur raumlufttechnischen Anlage der DE 10 2008 057 787 B3 basierend auf einem Luftdruckwert der Hauptzuluftleitung und bzw. oder der Hauptabluftleitung anstelle eines Luftdruckwerts des ersten Raums bzw. der ersten Raumzone erfolgen. Dies kann Bauraum für den Raumdrucksensor sowie dessen Verkabelung einsparen. Auch können die Kosten für den Raumdrucksensor und dessen Verkabelung eingespart werden. Insbesondere kann ein Druckaufnehmer zur Erfassung des Ist-Werts des Luftdrucks der Hauptzuluftleitung und bzw. oder der Hauptabluftleitung für die Regelung mehrerer Räume bzw. Raumzonen verwendet werden, wie im Folgenden noch näher erläutert werden wird.

Vorteilhaft ist auch, dass die erfindungsgemäße Regelungseinheit keine Datenverbindung z.B. zu einer übergeordneten bzw. zentralen Regelungs- und Steuereinheit eines Lüftungsgerätes einer derartigen Lüftungsanlage benötigt. Daher kann die erfindungsgemäße Regelungseinheit auch bei bestehenden Lüftungsanlagen und insbesondere bei bestehenden KWL-Anlagen nachgerüstet und unabhängig von dessen zentraler Regelungs- und Steuereinheit betrieben werden, ohne dass Probleme mit der Kompatibilität zur vorhandenen Regelung der Lüftungsanlage entstehen können.

Gemäß einem Aspekt der Erfindung ist die Regelungseinheit ferner ausgebildet zu erhalten:
- einen zweiten Soll-Wert der Luftbelastung eines zweiten Raums oder einer zweiten Raumzone und
- einen zweiten Ist-Wert der Luftbelastung des zweiten Raums oder der zweiten Raumzone,
wobei die Regelungseinheit auch einen zweiten Luftdruckregler aufweist, welcher ausgebildet ist, basierend auf dem Soll-Wert des Luftdrucks und dem Ist-Wert des Luftdrucks eine zweite Luftdruckstellgröße zu erzeugen, ferner einen zweiten Luftbelastungsführungsregler, welcher ausgebildet ist, basierend auf dem zweiten Soll-Wert der Luftbelastung und der zweiten Luftdruckstellgröße eine zweite Luftbelastungsstellgröße zu erzeugen, und einen zweiten Luftbelastungsregler, welcher ausgebildet ist, basierend auf der zweiten Luftbelastungsstellgröße und dem zweiten Ist-Wert der Luftbelastung eine zweite Druckstellgröße des zweiten Raums oder der zweiten Raumzone zu erzeugen.

Auf diese Art und Weise können die zuvor beschriebenen Funktionen der erfindungsgemäßen Regelungseinheit und die hieraus resultierenden Eigenschaften und Vorteile auch auf die Veränderung des Maßes der Zuluftzufuhr in einem zweiten Raum bzw. in einer zweiten Raumzone angewendet werden. Dies gilt ebenso für die Abluft.

Hierbei kommt insbesondere der zuvor bereits erwähnte Vorteil der Erfindung zum Tragen, für die Regelung der Zuluftzufuhr in dem zweiten Raum bzw. in der zweiten Raumzone und bzw. oder für die Regelung der Abluftabfuhr aus dem zweiten Raum bzw. aus der zweiten Raumzone ebenfalls den Ist-Wert sowie den Soll-Wert des Luftdrucks der Hauptzuluftleitung bzw. der Hauptabluftleitung zu verwenden, so dass die Regelung beider Räume basierend auf denselben Soll- und Ist-Werten des Luftdrucks erfolgen kann. Dies gilt entsprechend bei der Anwendung der erfindungsgemäßen Regelungseinheit auf weitere Räume bzw. Raumzonen. Dies kann die Anzahl der Sensoren reduzieren und insbesondere deren bisher erforderlichen Verkabelungsaufwand in die einzelnen Räume hinein.

Besonders zu erwähnen ist dabei die vorteilhafte Eigenschaft der erfindungsgemäßen Regelungseinheit, dass hierdurch selbsttätig das Maß der Zuluftzufuhr zu den Räumen bzw. Raumzonen untereinander ausgeglichen werden kann. Dies gilt ebenso für die Abluft. Dies sei beispielhaft veranschaulicht:
Die erfindungsgemäße Regelungseinheit überwacht beispielsweise den CO₂-Gehalt in dem ersten und zweiten Raum als Zulufträume. Steigt der CO₂-Gehalt in dem ersten Raum an, so erhöht die Regelungseinheit wie zuvor beschrieben die Offenstellung des zughörigen ersten Drosselelements. Durch die Erhöhung der Offenstellung des ersten Drosselelements steigt der Volumenstrom der Zuluft für den ersten Raum, d.h. das Maß der Zuluftzufuhr in den ersten Raum.

Durch die Erhöhung der Offenstellung des ersten Drosselelements des ersten Raums sinkt der Differenzdruck über dem ersten Drosselelement ab. Hierdurch reduziert sich der Differenzdruck des gesamten Luftleitungssystems, d.h. der Differenzdruck in der Hauptzuluftleitung, welcher wie zuvor beschrieben sensorisch erfasst und der erfindungsgemäßen Regelungseinheit zugeführt wird. Die Regelungseinheit kompensiert diesen Verlust des Differenzdrucks im Luftleitungssystem der Zuluft, d.h. in der Hauptzuluftleitung, durch anteilige Verringerung der Offenstellung des zweiten Drosselelements des zweiten Raums. Durch die Reduzierung der Offenstellung des zweiten Drosselelements des zweiten Raums verringert sich der anteilige Luftvolumenstrom in den zweiten Raum. Dadurch wird ein Ausgleich des erhöhten Luftvolumenstroms des ersten Raums hergestellt.

Mit anderen Worten führt in diesem Beispiel der überschrittene CO₂-Gehalt des ersten Raums zu einem Erhöhen des Volumenstroms der Zuluft in den ersten Raum, um vermehrt CO₂ aus dem ersten Raum abzuführen. Dies führt zu einem Druckverlust in der Hauptzuluftleitung, welcher die Regelungseinheit sowohl für den ersten Raum als auch für den zweiten Raum durch jeweiliges Verringern der Volumenströme der Zuluft entgegenwirkt. Da für den zweiten Raum keine erhöhte CO₂-Belastung vorliegt, wird das Verringern des Volumenstroms der Zuluft in den zweiten Raum auch tatsächlich ausgeführt. Für den ersten Raum wirken das Verringern des Volumenstroms der Zuluft aufgrund des Druckverlusts in der Hauptzuluftleitung und das Erhöhen des Volumenstroms der Zuluft aufgrund des überschrittenen CO₂-Gehalts jedoch einander entgegen, so dass sich hier ein Gleichgewicht zwischen Erhöhen und Verringern des Volumenstroms der Zuluft in Abhängigkeit der aktuellen Ist-Werte des CO₂-Gehalts des ersten Raums und des Druckverlusts in der Hauptzuluftleitung einstellt. Dies führt zu einem größeren Volumenstroms der Zuluft in den ersten Raum als in den zweiten Raum, so dass ein Gleichgewicht der Volumenströme hergestellt und die Abweichung zwischen Ist-Wert und Soll-Wert des Luftdrucks der Hauptzuluftleitung ausgeglichen werden kann, ohne die Luftdrücke der beiden Räume erfassen und betrachten zu müssen.

Gemäß einem weiteren Aspekt der Erfindung ist die Regelungseinheit ferner ausgebildet zu erhalten
- einen zweiten Soll-Wert der Luftbelastung eines zweiten Raums oder einer zweiten Raumzone und
- einen zweiten Ist-Wert der Luftbelastung des zweiten Raums oder der zweiten Raumzone,
wobei die Regelungseinheit auch einen zweiten Luftbelastungsführungsregler aufweist, welcher ausgebildet ist, basierend auf dem zweiten Soll-Wert der Luftbelastung und der ersten Luftdruckstellgröße eine zweite Luftbelastungsstellgröße zu erzeugen, und einen zweiten Luftbelastungsregler, welcher ausgebildet ist, basierend auf der zweiten Luftbelastungsstellgröße und dem zweiten Ist-Wert der Luftbelastung eine zweite Druckstellgröße des zweiten Raums oder der zweiten Raumzone zu erzeugen.

Mit anderen Worten wurde gemäß des vorangehenden Aspekts der Erfindung das Erzeugen einer zweiten Luftdruckstellgröße mittels eines zweiten Luftdruckregler vorgenommen. Da dem zweiten Luftdruckregler jedoch ebenso wie dem ersten Luftdruckregler derselbe Soll-Wert des Luftdrucks und derselbe Ist-Wert des Luftdrucks der Hauptzuluftleitung bzw. der Hauptabluftleitung zugeführt werden, kann gemäß dieses Aspekt der Erfindung auf den zweiten Luftdruckregler verzichtet werden.

Mit anderen Worten werden gemäß des vorangehenden Aspekts der Erfindung die erste und zweite Luftdruckstellgröße auf die gleiche Art und Weise erzeugt. Daher kann gemäß dem vorliegenden Aspekt stattdessen die bereits bekannte erste Luftdruckstellgröße anstelle der zweiten Luftdruckstellgröße verwendet werden. Dies kann den Aufwand des zusätzlichen zweiten Luftdruckreglers vermeiden. Hierdurch kann ggfs. auch Rechenzeit eingespart werden.

Vorteilhaft an der Verwendung eines zusätzlichen zweiten Luftdruckreglers gemäß des vorangehenden Aspekts der Erfindung ist dennoch, dass der erste Luftdruckregler und der zweite Luftdruckregler unterschiedlich parametriert werden können, um trotz identischer Führungs- und Regelgrößen unterschiedliche Stellgrößen zu erzeugen. Durch diese unterschiedliche Parametrierung kann auf Unterschiede zwischen den beiden Räumen eingegangen werden.

Gemäß einem weiteren Aspekt der Erfindung ist die Regelungseinheit ferner ausgebildet, den Betrieb eines Zuluftventilators der Hauptzuluftleitung und bzw. oder eines Abluftventilators der Hauptabluftleitung in Abhängigkeit des ersten Ist-Werts der Luftbelastung zu beeinflussen. Hierüber kann das Maß der Zuluft und bzw. oder das Maß der Abluft von der Regelungseinheit beeinflusst und somit erhöht, gleichgehalten oder reduziert werden. Dies kann bei Bedarf eine Erhöhung oder Reduzierung des Volumenstroms der Zuluft bzw. der Abluft bewirken.

Diesem Aspekt der Erfindung liegt die Erkenntnis zugrunde, dass gemäß der zuvor beschriebenen Aspekte der Erfindung der Volumenstrom der Zuluft bzw. der Abluft konstant gehalten und lediglich die Anteile der Zuluft bzw. Abluft der einzelnen Zulufträume bzw. Ablufträume untereinander verändert wird, um auf eine erhöhte Luftbelastung eines Raums zu reagieren. Da dies jedoch nicht ausreichend sein kann, um die erhöhte Luftbelastung zu reduzieren, kann gemäß diesem Aspekt der Erfindung die Regelungseinheit bzw. eine ihrer Komponenten auf den Zuluftventilator der Hauptzuluftleitung und bzw. oder auf den Abluftventilator der Hauptabluftleitung einwirken und dessen Betrieb beeinflussen. Hierdurch kann z.B. für die Dauer der erhöhten Luftbelastung z.B. der Zuluftventilator von der Regelungseinheit veranlasst werden, seine Drehzahl zu erhöhen und hierdurch einen größeren Volumenstrom der Zuluft in der Hauptzuluftleitung zu erzeugen, welcher wie zuvor beschrieben anteilig den Raum mit der erhöhten Luftbelastung erreichen und den Abbau der erhöhten Luftbelastung beschleunigen kann. Dies gilt entsprechend für die Abluftseite. Auch können sowohl der Volumenstrom der Zuluft und der Abluft gleichzeitig von der Regelungseinheit beeinflusst werden.

Hierzu kann die Regelungseinheit direkt eine entsprechende Anweisung an ein zentrales Lüftungsgerät der Lüftungsanlage übermitteln bzw. an dessen Regelungs- und Steuerungseinheit, damit seitens des zentralen Lüftungsgeräts bzw. dessen Regelungs- und Steuerungseinheit ein Zuluftventilator bzw. ein Abluftventilator derart betrieben werden kann, wie es der Anweisung der Regelungseinheit entspricht. Diese Anweisung kann z.B. eine Erhöhung der Drehzahl des Ventilators um ein absolutes Maß und bzw. oder um ein relatives Maß in Form einer Drehzahlerhöhung oder einer Volumenstromerhöhung umfassen. Auch kann die Anweisung eine Ventilatoreinstellung wie z.B. eine bestimmte Leistungsstufe umfassen. Hierzu kann eine drahtgebundene und bzw. oder drahtlose Signalübertragung von der erfindungsgemäßen Regelungseinheit an das zentrale Lüftungsgerät bzw. dessen Regelungs- und Steuerungseinheit erfolgen.

Alternativ kann seitens der Regelungseinheit auch eine Information z.B. einer Luftbelastung an ein zentrales Lüftungsgerät der Lüftungsanlage bzw. an dessen Regelungs- und Steuerungseinheit übermittelt werden und das zentrale Lüftungsgerät bzw. dessen Regelungs- und Steuerungseinheit kann selbsttätig hierauf reagieren und den Volumenstrom der Hauptzuluftleitung und bzw. oder der Hauptabluftleitung erhöhen. Diese Information der Regelungseinheit kann einen Hinweis umfassen, dass überhaupt eine erhöhte Luftbelastung vorliegt und bzw. oder in welchem absoluten Maß und bzw. oder relativen Maß dies der Fall ist. Auch kann die Art der erhöhten Luftbelastung mitgeteilt werden. Dies kann das zentrale Lüftungsgerät bzw. dessen Regelungs- und Steuerungseinheit in die Lage versetzen, auf diese erhöhte Luftbelastung selbsttätig zu reagieren und hierbei ggfs. weitere Umstände in Betracht zu ziehen, welche seitens der erfindungsgemäßen Regelungseinheit nicht bekannt sind und daher auch dort nicht berücksichtig werden können.

Die Notwendigkeit, den Volumenstrom der Hauptzuluftleitung und bzw. oder der Hauptabluftleitung zu beeinflussen, kann seitens der Regelungseinheit vorzugsweise dadurch erkannt werden, indem der erste Ist-Wert der Luftbelastung des ersten Raums oder der ersten Raumzone mit dem entsprechenden ersten Soll-Wert der Luftbelastung verglichen wird, wie zuvor beschrieben. Wird dabei der erste Soll-Wert der Luftbelastung des ersten Raums oder der ersten Raumzone um ein vorbestimmtes Maß überschritten, welche signifikant über dem ersten Soll-Wert liegt, so kann aus diesem Umstand darauf geschlossen werden, dass die Erhöhung der Zuluft in dem ersten Raum bzw. in der ersten Raumzone, welche wie zuvor beschrieben durch das Erreichen bzw. Überschreiten des ersten Soll-Werts der Luftbelastung bereits veranlasst wurde, nicht ausreichend ist, um dieser Überschreitung entgegenzuwirken. Schließlich hat die Luftbelastung in dem ersten Raum bzw. in der ersten Raumzone trotz der Erhöhung der Zuluft derart weiter zugenommen, dass auch das vorbestimmte Maß der erhöhten Luftbelastung erreicht oder überschritten wurde. Dies kann die Regelungseinheit veranlassen, den Volumenstrom der Hauptzuluftleitung zu beeinflussen, wie zuvor beschrieben. Dieser weitere Soll-Wert der Luftbelastung desselben Raums kann als erster Soll-Wert einer Maximalluftbelastung bezeichnet werden. Dies gilt entsprechend für die Abluft. Dies gilt ggfs. entsprechend für einen zweiten Raum oder für eine zweite Raumzone.

Alternativ oder zusätzlich können seitens der Regelungseinheit auch die erste Luftdruckstellgröße, die erste Luftbelastungsstellgröße und bzw. oder die erste Druckstellgröße dahingehend betrachtet werden, welchen Werte diese Größen absolut oder relativ zu einem vorbestimmten Normalwert aufweisen bzw. welche Veränderungen hier absolut oder relativ vorliegen. Auch auf diese Art und Weise kann seitens der Regelungseinheit die Notwendigkeit erkannt werden, den Volumenstrom der Hauptzuluftleitung zu beeinflussen, wie zuvor beschrieben. Dies kann die Umsetzung dieses Aspekts der Erfindung ggfs. vereinfachen. Dies gilt entsprechend für die Abluft.

Vorteilhaft ist hierbei auch, dass durch die Erhöhung des Volumenstroms der Hauptzuluftleitung einem Raum eine ausreichend hohe Luftmenge zugeführt werden kann, um z.B. über einen entsprechend ausgebildeten Zuluftauslass eine Erwärmung oder Abkühlung des Luftstroms des Raums ausführen zu können. Dies kann eine wirksame Erwärmung oder Abkühlung des entsprechenden Zuluftraums ermöglichen. Mit anderen Worten kann die Einzelluftmenge an den erforderlichen Volumenstrom für den Heiz- oder Kühlfall angepasst werden.

Gemäß einem weiteren Aspekt der Erfindung ist die Regelungseinheit ferner ausgebildet zu erhalten:
- einen ersten Soll-Wert einer Maximalluftbelastung des ersten Raums oder der ersten Raumzone,
mit einem ersten Luftbelastungssollwertregler, welcher ausgebildet ist, basierend auf dem ersten Soll-Wert der Maximalluftbelastung und dem ersten Ist-Wert der Luftbelastung einen ersten Luftbelastungsmaximalwert zu erzeugen, und mit einer Volumenstromsteuerung, welche ausgebildet ist, basierend auf dem ersten Luftbelastungsmaximalwert ein Steuerungssignal für den Zuluftventilator der Hauptzuluftleitung und bzw. oder für den Abluftventilator der Hauptabluftleitung zu erzeugen.

Der erste Soll-Wert der Maximalluftbelastung des ersten Raums bzw. der ersten Raumzone stellt einen zweiten Soll-Wert dar, welcher oberhalb des zuvor beschriebenen ersten Soll-Werts der Luftbelastung liegt. Während der erste Soll-Wert der Luftbelastung des ersten Raums bzw. der ersten Raumzone so gewählt und vorgegeben werden kann, dass bei seinem Erreichen oder Überschreiten eine Erhöhung der Luftzufuhr für diesen Raum wie zuvor beschrieben ausgelöst werden kann, kann durch Erreichen oder Überschreiten des ersten Soll-Werts der Maximalluftbelastung erkannt werden, dass die Erhöhung der Luftzufuhr für diesen Raum nicht ausreichend ist, da trotz dieser Maßnahme der höhere erste Soll-Werts der Maximalluftbelastung erreicht oder überschritten wurde. Dies kann ein Anlass sein, den Volumenstrom z.B. der Hauptzuluftleitung wie zuvor beschrieben zu erhöhen und somit der Luftbelastung zusätzlich entgegenzuwirken.

Mit anderen Worten kann bei einem gewissen Maß einer erhöhten Luftbelastung zunächst der Anteil des Volumenstroms z.B. der Hauptzuluftleitung vergrößert werden, welcher dem betreffenden Raum bzw. der betreffenden Raumzone relativ zu den übrigen Räumen bzw. Raumzonen zugeführt wird. Ist dies jedoch nicht ausreichend, kann der Volumenstrom der Hauptzuluftleitung als Ganzes erhöht werden, was insbesondere zu einer Erhöhung der Luftzufuhr zu dem betreffenden Raum bzw. zu der betreffenden Raumzone führen kann. Diese beiden Fälle können durch einen ersten, geringeren Soll-Wert der Luftbelastung und einen ersten, höheren Soll-Wert der Maximalluftbelastung voneinander unterschieden werden. Hierdurch kann die Maßnahme der Beeinflussung des Volumenstroms der Hauptzuluftleitung zunächst vermieden werden, da diese zumindest eine gewissen Wirkung auch auf die übrigen, nicht von der erhöhten Luftbelastung betroffenen Räume bzw. Raumzonen haben sowie einen zusätzlichen Aufwand darstellen kann. Darüber hinaus kann diese Maßnahme der Beeinflussung des Volumenstroms der Hauptzuluftleitung angewendet werden, wenn dies erforderlich ist. Dies gilt entsprechend für die Abluftseite.

Vorzugsweise ist der erste Luftbelastungsregler ausgebildet, basierend auf der ersten Luftbelastungsstellgröße und dem ersten Luftbelastungsmaximalwert die erste Druckstellgröße des ersten Raums oder der ersten Raumzone zu erzeugen. Auf diese Weise kann alternativ zu dem zuvor verwendeten ersten Ist-Wert der Raumbelastung des ersten Raums bzw. der ersten Raumzone nun der erste Luftbelastungsmaximalwert zur Erzeugung der ersten Druckstellgröße des ersten Raums oder der ersten Raumzone verwendet werden, da der erste Luftbelastungsmaximalwert auf dem ersten Ist-Wert der Raumbelastung basiert. Die Parameter des ersten Luftbelastungsreglers können an diese Regelgröße angepasst werden, um auch auf diese Art und Weise die erste Druckstellgröße zu erzeugen. Dies kann eine Alternative zu der zuvor beschriebenen Erzeugung der ersten Druckstellgröße darstellen.

Gemäß einem weiteren Aspekt der Erfindung weist die Regelungseinheit einen Maximalwertermittler auf, welcher ausgebildet ist, aus dem ersten Luftbelastungsmaximalwert des ersten Raums oder der ersten Raumzone und einem zweiten Luftbelastungsmaximalwert eines zweiten Raums oder einer zweiten Raumzone den größten Luftbelastungsmaximalwert zu ermitteln und der Volumenstromsteuerung zur Verfügung zu stellen. Dies kann es ermöglichen, den Betrieb des Zuluftventilators der Hauptzuluftleitung und bzw. oder des Abluftventilators der Hauptabluftleitung in Abhängigkeit derjenigen Luftbelastung mehrerer Räume bzw. Raumzonen zu beeinflussen, welche die größte Luftbelastung darstellt. Auf diese Art und Weise kann der Volumenstrom der Hauptzuluftleitung bzw. der Hauptabluftleitung so gewählt werden, dass auch der höchsten Luftbelastung entgegengewirkt werden kann. Die Aufteilung des Volumenstroms der Hauptzuluftleitung bzw. der Hauptabluftleitung zwischen den Räumen erfolgt seitens der Regelungseinheit wie zuvor beschrieben.

Gemäß einem weiteren Aspekt der Erfindung ist die Volumenstromsteuerung ferner ausgebildet, aus dem ersten Luftbelastungsmaximalwert eines ersten Zuluftraums oder einer ersten Zuluftraumzone, vorzugsweise aus dem ermittelten größten Luftbelastungsmaximalwert der Zuluft, und aus einem ersten Luftbelastungsmaximalwert eines ersten Abluftraums oder einer ersten Abluftraumzone, vorzugsweise aus einem ermittelten größten Luftbelastungsmaximalwert der Abluft, den größten ersten Luftbelastungsmaximalwert, vorzugsweise den größten ermittelten größten Luftbelastungsmaximalwert, zu ermitteln und hierauf basierend das Steuerungssignal zu erzeugen.

In diesem Fall wird nicht, wie gemäß des vorangehenden Aspekts der Erfindung beschrieben, aus dem Bedarf zweier Zulufträume oder zweier Ablufträume der höhere Bedarf an Zuluft bzw. an Abluft ermittelt und der Volumenstrom der Hauptzuluftleitung bzw. der Hauptabluftleitung entsprechend beeinflusst. Vielmehr wird gemäß dieses Aspekts der Erfindung ein Bedarf an Zuluft und ein Bedarf an Abluft betrachtet, hieraus der höhere Bedarf an Zuluft bzw. an Abluft ermittelt und der Volumenstrom der Hauptzuluftleitung bzw. der Hauptabluftleitung entsprechend beeinflusst. Dies kann es ermöglichen, sowohl die Zuluftseite als auch die Abluftseite der Lüftungsanlage bei der Beeinflussung des Betriebs des Zuluftventilators der Hauptzuluftleitung und bzw. oder des Abluftventilators der Hauptabluftleitung zu berücksichtigen.

Wird dabei dieser Aspekt der Erfindung mit dem vorangehenden Aspekt der Erfindung kombiniert verwendet, so kann zum einem sowohl die größte Luftbelastungsmaximalwert der Zuluft als auch der größte Luftbelastungsmaximalwert der Abluft ermittelt und anschließend der größere dieser beiden Werte ermittelt und der Volumenstromsteuerung zur Verfügung gestellt werden. Dies kann es ermöglichen, der insgesamt höchsten Luftbelastung wie zuvor beschrieben entgegenwirken zu können.

Die vorliegende Erfindung betrifft auch ein Verfahren zum Betreiben einer Regelungseinheit für eine Lüftungsanlage, vorzugsweise für eine KWL-Anlage, wie zuvor beschrieben mit wenigstens den Schritten:
- Erhalten eines Soll-Werts des Luftdrucks einer Hauptzuluftleitung und bzw. oder einer Hauptabluftleitung,
- Erhalten eines Ist-Werts des Luftdrucks der Hauptzuluftleitung und bzw. oder der Hauptabluftleitung,
- Erzeugen einer ersten Luftdruckstellgröße basierend auf dem Soll-Wert des Luftdrucks und dem Ist-Wert des Luftdrucks,
- Erhalten eines ersten Soll-Werts einer Luftbelastung eines ersten Raums oder einer ersten Raumzone,
- Erzeugen einer ersten Luftbelastungsstellgröße basierend auf dem ersten Soll-Wert der Luftbelastung und der ersten Luftdruckstellgröße,
- Erhalten eines ersten Ist-Wert der Luftbelastung des ersten Raums oder der ersten Raumzone und
- Erzeugen einer ersten Druckstellgröße basierend auf der ersten Luftbelastungsstellgröße und dem ersten Ist-Wert der Luftbelastung.

Auf diese Art und Weise können die zuvor anhand der erfindungsgemäßen Regelungseinheit beschriebenen Aspekte als Verfahrensschritte umgesetzt werden. Die entsprechenden Eigenschaften und Vorteile sollen daher hier nicht wiederholt werden.

Gemäß einem Aspekt der Erfindung weist das Verfahren ferner wenigstens die weiteren Schritte auf:
- Erhalten eines zweiten Soll-Werts der Luftbelastung eines zweiten Raums oder einer zweiten Raumzone,
- Erhalten eines zweiten Ist-Werts der Luftbelastung des zweiten Raums (14b; 15b) oder der zweiten Raumzone,
und entweder
- Erzeugen einer zweiten Luftdruckstellgröße basierend auf dem Soll-Wert des Luftdrucks und dem Ist-Wert des Luftdrucks, und
- Erzeugen einer zweiten Luftbelastungsstellgröße basierend auf dem zweiten Soll-Wert der Luftbelastung und der zweiten Luftdruckstellgröße,
oder
- Erzeugen einer zweiten Luftbelastungsstellgröße basierend auf dem zweiten Soll-Wert der Luftbelastung und der ersten Luftdruckstellgröße,
und
- Erzeugen einer zweiten Druckstellgröße basierend auf der zweiten Luftbelastungsstellgröße und dem zweiten Ist-Wert der Luftbelastung.

Auf diese Art und Weise können die zuvor anhand der erfindungsgemäßen Regelungseinheit beschriebenen Aspekte als Verfahrensschritte umgesetzt werden. Die entsprechenden Eigenschaften und Vorteile sollen daher hier nicht wiederholt werden.

Die vorliegende Erfindung betrifft auch eine Lüftungsanlage, vorzugsweise KWL-Anlage, mit einer Hauptzuluftleitung, welche ausgebildet ist, Zuluft einer Mehrzahl von Teilzuluftleitungen zuzuführen, wobei die Teilzuluftleitungen ausgebildet sind, die Zuluft einer Mehrzahl von Räumen oder Raumzonen zuzuführen, wobei eine erste Teilzuluftleitung ein erstes Drosselelement, vorzugsweise mit stetigem Antrieb, aufweist, welches ausgebildet ist, das Maß der Zuluftzufuhr in einen ersten Raum zu verändern, mit einem Druckaufnehmer, welcher ausgebildet ist, einen Ist-Wert des Luftdrucks der Hauptzuluftleitung zu erfassen, mit einem Luftdruck-Sollwertgeber, welcher ausgebildet ist, einen Soll-Wert des Luftdrucks der Hauptzuluftleitung auszugeben, mit einem ersten Belastungssensor, welcher ausgebildet ist, einen ersten Ist-Wert einer Luftbelastung eines ersten Raums oder einer ersten Raumzone zu erfassen, mit einem ersten Luftbelastung-Sollwertgeber, welcher ausgebildet ist, einen ersten Soll-Wert der Luftbelastung des ersten Raums oder der ersten Raumzone auszugeben, und mit einer Regelungseinheit wie zuvor beschrieben, wobei das erste Drosselelement der ersten Teilzuluftleitung ausgebildet ist, das Maß der Zuluftzufuhr in den ersten Raum basierend auf der ersten Druckstellgröße zu verändern, wobei vorzugsweise der erste Belastungssensor ausgebildet ist, den ersten Ist-Wert der Luftbelastung als CO₂-Konzentration zu erfassen, wobei vorzugsweise der Druckaufnehmer ausgebildet ist, den Ist-Wert des Luftdrucks der Hauptzuluftleitung als Differenzluftdruck zu erfassen.

Die Elemente der erfindungsgemäßen Lüftungsanlage sowie deren Eigenschaften und Vorteile wurden bereits zuvor anhand der erfindungsgemäßen Regelungseinheit beschrieben und sollen daher hier nicht wiederholt werden.

Gemäß einem Aspekt der Erfindung weist eine zweite Teilzuluftleitung ein zweites Drosselelement auf, welches ausgebildet ist, das Maß der Zuluftzufuhr in einen zweiten Raum zu verändern, ferner mit einem zweiten Belastungssensor, welcher ausgebildet ist, einen zweiten Ist-Wert der Luftbelastung eines zweiten Raums oder einer zweiten Raumzone zu erfassen, und mit einem zweiten Luftbelastung-Sollwertgeber, welcher ausgebildet ist, einen zweiten Soll-Wert der Luftbelastung des zweiten Raums oder der zweiten Raumzone auszugeben, wobei das zweite Drosselelement der zweiten Teilzuluftleitung ausgebildet ist, das Maß der Zuluftzufuhr in den zweiten Raum basierend auf der zweiten Druckstellgröße zu verändern, wobei vorzugsweise der zweite Belastungssensor ausgebildet ist, den zweiten Ist-Wert der Luftbelastung als CO₂-Konzentration zu erfassen.

Die Elemente der erfindungsgemäßen Lüftungsanlage sowie deren Eigenschaften und Vorteile wurden bereits zuvor anhand der erfindungsgemäßen Regelungseinheit beschrieben und sollen daher hier nicht wiederholt werden.

Die Elemente der erfindungsgemäßen Lüftungsanlage sowie deren Eigenschaften und Vorteile wurden bereits zuvor anhand der erfindungsgemäßen Regelungseinheit beschrieben und sollen daher hier nicht wiederholt werden.

Die vorliegende Erfindung betrifft auch eine Lüftungsanlage, vorzugsweise KWL-Anlage, mit einer Hauptabluftleitung, welche ausgebildet ist, Abluft von einer Mehrzahl von Teilabluftleitungen zugeführt zu bekommen, wobei die Teilabluftleitungen ausgebildet sind, die Abluft einer Mehrzahl von Räumen oder Raumzonen zugeführt zu bekommen, wobei eine erste Teilabluftleitung ein erstes Drosselelement, vorzugsweise mit stetigem Antrieb, aufweist, welches ausgebildet ist, das Maß der Abluftabfuhr aus einem ersten Raum zu verändern, mit einem Druckaufnehmer, welcher ausgebildet ist, einen Ist-Wert des Luftdrucks der Hauptabluftleitung zu erfassen, mit einem Luftdruck-Sollwertgeber, welcher ausgebildet ist, einen Soll-Wert des Luftdrucks der Hauptabluftleitung auszugeben, mit einem ersten Belastungssensor, welcher ausgebildet ist, einen ersten Ist-Wert einer Luftbelastung eines ersten Raums oder einer ersten Raumzone zu erfassen, mit einem ersten Luftbelastung-Sollwertgeber, welcher ausgebildet ist, einen ersten Soll-Wert der Luftbelastung des ersten Raums oder der ersten Raumzone auszugeben, und mit einer Regelungseinheit wie zuvor beschrieben, wobei das erste Drosselelement der ersten Teilabluftleitung ausgebildet ist, das Maß der Abluftabfuhr aus dem ersten Raum basierend auf der ersten Druckstellgröße zu verändern, wobei vorzugsweise der erste Belastungssensor ausgebildet ist, den ersten Ist-Wert der Luftbelastung als Luftfeuchtigkeit zu erfassen, wobei vorzugsweise der Druckaufnehmer ausgebildet ist, den Ist-Wert des Luftdrucks der Hauptabluftleitung als Differenzluftdruck zu erfassen.

Die Elemente der erfindungsgemäßen Lüftungsanlage sowie deren Eigenschaften und Vorteile wurden bereits zuvor anhand der erfindungsgemäßen Regelungseinheit beschrieben und sollen daher hier nicht wiederholt werden.

Gemäß einem Aspekt der Erfindung weist eine zweite Teilabluftleitung ein zweites Drosselelement auf, welches ausgebildet ist, das Maß der Abluftabfuhr aus einem zweiten Raum zu verändern, ferner mit einem zweiten Belastungssensor, welcher ausgebildet ist, einen zweiten Ist-Wert der Luftbelastung des zweiten Raums oder einer zweiten Raumzone zu erfassen, und mit einem zweiten Luftbelastung-Sollwertgeber, welcher ausgebildet ist, einen zweiten Soll-Wert der Luftbelastung des zweiten Raums oder der zweiten Raumzone auszugeben, wobei das zweite Drosselelement der zweiten Teilabluftleitung ausgebildet ist, das Maß der Abluftabfuhr aus dem zweiten Raum basierend auf der zweiten Druckstellgröße zu verändern, wobei vorzugsweise der zweite Belastungssensor ausgebildet ist, den zweiten Ist-Wert der Luftbelastung als Luftfeuchtigkeit zu erfassen.

Die Elemente der erfindungsgemäßen Lüftungsanlage sowie deren Eigenschaften und Vorteile wurden bereits zuvor anhand der erfindungsgemäßen Regelungseinheit beschrieben und sollen daher hier nicht wiederholt werden.

Die Elemente der erfindungsgemäßen Lüftungsanlage sowie deren Eigenschaften und Vorteile wurden bereits zuvor anhand der erfindungsgemäßen Regelungseinheit beschrieben und sollen daher hier nicht wiederholt werden.

Die vorliegende Erfindung betrifft auch ein Verfahren zum Betreiben einer Lüftungsanlage, vorzugsweise einer KWL-Anlage, wie zuvor beschrieben mit wenigstens den Schritten:
- Ausgeben eines Soll-Werts des Luftdrucks einer Hauptzuluftleitung und bzw. oder einer Hauptabluftleitung,
- Erfassen eines Ist-Werts des Luftdrucks der Hauptzuluftleitung und bzw. oder der Hauptabluftleitung,
- Erzeugen einer ersten Luftdruckstellgröße basierend auf dem Soll-Wert des Luftdrucks und dem Ist-Wert des Luftdrucks,
- Ausgeben eines ersten Soll-Werts einer Luftbelastung eines ersten Raums oder einer ersten Raumzone,
- Erzeugen einer ersten Luftbelastungsstellgröße basierend auf dem ersten Soll-Wert der Luftbelastung und der ersten Luftdruckstellgröße,
- Erfassen eines ersten Ist-Werts der Luftbelastung des ersten Raums oder der ersten Raumzone und
- Erzeugen einer ersten Druckstellgröße basierend auf der ersten Luftbelastungsstellgröße und dem ersten Ist-Wert einer Luftbelastung.

Auf diese Art und Weise können die zuvor anhand der erfindungsgemäßen Lüftungsanlage beschriebenen Aspekte als Verfahrensschritte umgesetzt werden. Die entsprechenden Eigenschaften und Vorteile sollen daher hier nicht wiederholt werden.

Gemäß einem Aspekt der Erfindung weist das Verfahren ferner wenigstens die weiteren Schritte auf:
- Ausgeben eines zweiten Soll-Werts der Luftbelastung eines zweiten Raums oder einer zweiten Raumzone,
- Erfassen eines zweiten Ist-Werts der Luftbelastung des zweiten Raums oder der zweiten Raumzone,
und entweder
- Erzeugen einer zweiten Luftdruckstellgröße basierend auf dem Soll-Wert des Luftdrucks und dem Ist-Wert des Luftdrucks, und
- Erzeugen einer zweiten Luftbelastungsstellgröße basierend auf dem zweiten Soll-Wert der Luftbelastung und der zweiten Luftdruckstellgröße,
oder
- Erzeugen einer zweiten Luftbelastungsstellgröße basierend auf dem zweiten Soll-Wert der Luftbelastung und der ersten Luftdruckstellgröße,
und
- Erzeugen einer zweiten Druckstellgröße basierend auf der zweiten Luftbelastungsstellgröße und dem zweiten Ist-Wert der Luftbelastung.

Auf diese Art und Weise können die zuvor anhand der erfindungsgemäßen Lüftungsanlage beschriebenen Aspekte als Verfahrensschritte umgesetzt werden. Die entsprechenden Eigenschaften und Vorteile sollen daher hier nicht wiederholt werden.

Die vorliegende Erfindung betrifft auch ein Computerprogrammprodukt mit einem Programmcode, der auf einem von einem Computer lesbaren Medium gespeichert ist, zur Ausführung eines Verfahrens wie zuvor beschrieben. Das computerlesbare Medium kann ein interner Speicher eines Computers sowie ein entfernbarer Speicher wie z.B. eine Diskette, eine CD, eine DVD, ein USB-Stick, eine Speicherkarte und dergleichen sein. Auf diese Art und Weise können die erfindungsgemäßen Verfahren einem Computer, welcher eine erfindungsgemäße Regelungseinheit einer erfindungsgemäßen Lüftungsanlage sein kann, zur Verfügung gestellt werden.

Mit anderen Worten sei zu der erfindungsgemäßen Regelungseinheit sowie zu der erfindungsgemäßen Lüftungsanlage folgendes anzumerken:
Die erfindungsgemäße Regelungseinheit kann die durch den Lebensrhythmus zeitlich unterschiedliche Nutzung der Räume nutzen. Durch zeitlich unterschiedliche Nutzung kann auch die auftretende Belastung der Raumluft, beispielsweise durch CO₂ unterschiedlich sein. Die Wohnräume können beispielsweise am Tag genutzt werden, in der Nacht die Schlafräume. Dadurch können anteilige Kapazitäten der einzelnen Volumenströme aus diesen ungenutzten Räumen für die zu diesem Zeitpunkt durch Nutzung belasteten Räume frei werden.

Gemäß der erfindungsgemäßen Lüftungsanlage können über Sensoren in den Räumen die unterschiedlichen Belastungen der in den Räumen befindlichen Luft ermittelt und seitens der erfindungsgemäßen Regelungseinheit mit entsprechenden Vorgaben verglichen werden. Ergeben die Messwerte z.B. in einem Zuluftraum oder in mehreren Zulufträumen höhere Werte, so können Luftvolumenkapazitäten von den Zulufträumen mit geringeren Messwerten zu den Zulufträumen mit höheren Messwerten umverlagert werden. Durch die Anhebung des Volumenstroms in höher belastete Räume kann hier eine Senkung der Luftschadstoffe erreicht werden. Der verfügbare Volumenstrom kann so durch die erfindungsgemäße Regelungseinheit effektiver als bisher bekannt eingesetzt werden.

Dabei kann die erfindungsgemäße Regelungseinheit die Summe der einzelnen Volumenströme konstant halten, wodurch keine Beeinflussung des vorgeschalteten KWL-Gerätes entsteht. Die Konstanthaltung der Summe der Einzelvolumenströme kann indirekt durch Konstanthaltung der Differenzdrücke im System der Lüftungsleitungen gegenüber Umgebungsdruck erfolgen.

Die erfindungsgemäße Regelungseinheit kann jeweils sowohl für die Zulufträume als auch für die Ablufträume verwendet werden. Bei den Zulufträumen handelt es sich vorzugsweise um Wohn- und Schlafräume. Hier können die Belastungen durch CO₂ der Personen im Vordergrund stehen. Bei den Ablufträumen handelt es sich vorzugweise um Funktionsräume wie Küche und Bad. Hier können die Belastungen der Raumluft durch Feuchteeinbringung im Vordergrund stehen. Wie zuvor beschrieben kann auch die Luft der Ablufträume zeitlich unterschiedlichen Belastungen unterliegen.

Eine Variante der erfindungsgemäßen Regelungseinheit kann es sein, dass eine lastabhängige Regelung der Volumenströme entweder nur für die Zulufträume oder nur für die Ablufträume vorgesehen wird. Für den ungeregelten Teil der Lüftungsanlage kann dann ein fester Abgleich der Volumenströme in den einzelnen Räumen erfolgen. Dieser Abgleich kann nach dem üblichen Stand der Technik durch Erfassen der Volumenströme und Einstellen von passiven Drosselelementen erfolgen.

Die Grundfunktion der erfindungsgemäßen Lüftungsanlage kann die erfindungsgemäße Regelungseinheit sein, die vorzugsweise den Differenzdruck gemessen gegen Umgebungsdruck konstant halten kann. Der Messpunkt kann in der Hauptluftleitung für Zuluft und bzw. oder in der Hauptluftleitung für Abluft direkt am vorgelagerten zentralen Lüftungsgerät liegen. Das Konstantregeln der Differenzdrücke kann von der erfindungsgemäßen Regelungseinheit durch teilweises Verstellen von nachgelagerten Drosselelementen erreicht werden, die mit einem Stellmotor ausgerüstet sein können. Der Stellantrieb kann derart geartet sein, dass der Stellantrieb das Drosselelement in stufenlose Teilöffnungsstellungen stellen kann.

Zu der erfindungsgemäßen Lüftungsanlage können Sensoren gehören. Die Sensoren können sich in den Räumen oder bei den Ablufträumen auch in den Luftleitungen von diesen befinden. Die Sensoren können beispielsweise den CO₂- oder Luftfeuchtegehalt der Luft messen.

Die erfindungsgemäße Regelungseinheit kann den beispielshaften CO₂-Gehalt in den einzelnen Zulufträumen überwachen. Steigt der CO₂-Gehalt in einem der Räume an, so kann die erfindungsgemäße Regelungseinheit die Offenstellung des zughörigen Drosselelements erhöhen. Durch Erhöhung der Offenstellung kann der Volumenstrom für diesen Raum steigen. Durch die Erhöhung der Offenstellung dieses Drosselelements kann der Differenzdruck über diesem Drosselelement sinken. Dadurch kann sich der Differenzdruck des kompletten zugehörigen Luftleitungssystems reduzieren. Die erfindungsgemäße Regelungseinheit kann diesen Differenzdruckverlust im Luftleitungssystem der Zuluft durch anteilige Verringerung der Offenstellung der restlichen Drosselelemente kompensieren. Durch die Reduzierung der Offenstellung kann sich der anteilige Luftvolumenstrom in diesen Luftleitungen verringern. Dadurch kann ein Ausgleich des erhöhten Luftvolumenstroms des Raums mit erhöhter Belastung hergestellt werden.

Ein Ausführungsbeispiel und weitere Vorteile der Erfindung werden nachstehend im Zusammenhang mit den folgenden Figuren erläutert. Darin zeigt:
- Fig. 1: eine schematische Darstellung einer erfindungsgemäßen Lüftungsanlage mit erfindungsgemäßer Regelungseinheit;
- Fig. 2: eine schematische Detaildarstellung einer erfindungsgemäßen Regelungseinheit gemäß einem ersten Ausführungsbeispiel; und
- Fig. 3: eine schematische Detaildarstellung einer erfindungsgemäßen Regelungseinheit gemäß einem zweiten Ausführungsbeispiel.

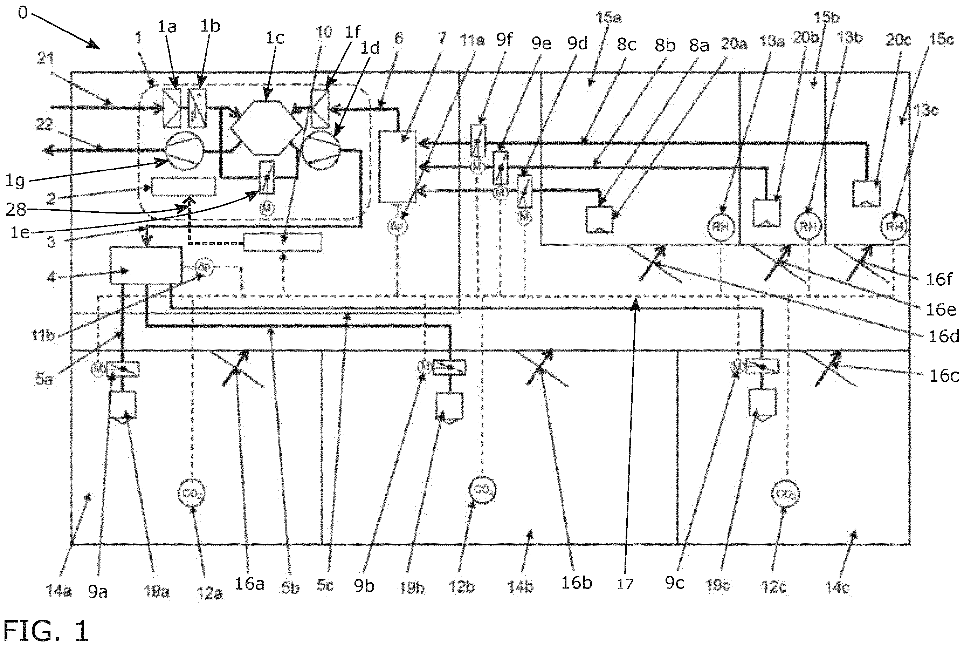

Fig. 1 zeigt eine schematische Darstellung einer erfindungsgemäßen Lüftungsanlage 0 in Form einer KWL-Anlage 0 mit erfindungsgemäßer Regelungseinheit 10. Die Lüftungsanlage 0 weist ein vorgelagertes bzw. zentrales Lüftungsgerät 1 zur Aufbereitung von Zuluft und Abluft mit zugehöriger zentraler Regelungs- und Steuereinheit 2 auf. Gezeigt wird ein Lüftungsgerät 1 mit in der Praxis gebräuchlichem Aufbau. Es können jedoch auch andere Varianten von Lüftungsgeräten 1 verwendet werden. Über einen Außenluftanschluss 21, der auch als Zuluftanschluss 21 bezeichnet werden kann, kann Zuluft von außerhalb eines Gebäudes durch das Lüftungsgerät 1 bzw. durch die Lüftungsanlage 0 in das Innere des Gebäudes gelangen. Umgekehrt kann Abluft aus dem Inneren des Gebäudes von dem Lüftungsgerät 1 bzw. von der Lüftungsanlage 0 über einen Fortluftanschluss 22, der auch als Abluftanschluss 22 bezeichnet werden kann, an die Umgebung des Gebäudes abgegeben werden.

Das Lüftungsgerät 1 weist einen Zuluftfilter 1a auf, welcher auch als Außenluftfilter 1a bezeichnet werden kann und mit dem Außenluftanschluss 21 derart verbunden ist, dass die zugeführte Außenluft, d.h. die Zuluft, den Zuluftfilter 1a durchströmt. Nachfolgend zum Zuluftfilter 1a ist ein Vorerhitzer 1b angeordnet und ausgebildet, die Zuluft bei Bedarf elektrisch zu erwärmen, um eine Eisbildung im nachfolgenden Plattentauscher 1c zu vermeiden. Der Plattentauscher 1c dient dem Austausch der Wärme zwischen der Zuluft und der Abluft. Anschließend folgt im Verlauf der Zuluft ein Zuluftventilator 1d, der auch als Außenluftventilator 1d bezeichnet werden kann. Der Zuluftventilator 1d dient dem Erzeugen des Luftstroms der Zuluft, so dass die Zuluft von dem Zuluftventilator 1d durch das Lüftungsgerät 1 hindurch der Hauptzuluftleitung 3 zugeführt werden kann. Zusätzlich ist parallel zum Plattentauscher 1c ein Bypasskanal mit Bypassklappe 1e angeordnet, so dass die Zuluft auch unter Umgehung des Plattenkondensators 1c von dem Zuluftventilator 1d gefördert werden kann.

In der umgekehrten Richtung weist das Lüftungsgerät 1 einen Abluftfilter 1f auf, durch den hindurch die Abluft von der Hauptabluftleitung 6 in das Lüftungsgerät 1 gelangen kann. Auch die Abluft durchströmt wie zuvor erwähnt den Plattentauscher 1c. Der Luftstrom der Abluft wird von einem Abluftventilator 1g erzeugt, welcher auch als Fortluftventilator 1g bezeichnet werden kann. Durch den Abluftventilator 1g hindurch kann die Abluft über den Abluftanschluss 22 an die Umgebung des Gebäudes abgegeben werden.

Am Lüftungsgerät 1 angeschlossen ist eine Hauptzuluftleitung 3, an die über eine Luftverteilereinheit 4, die auch als Luftverteilkasten 4 bezeichnet werden kann, mehrere Teilzuluftleitungen 5a-5c angeschlossen sind, die auch als Teilluftleitungen für Zuluft 5a-5c bezeichnet werden können. Am Lüftungsgerät 1 ist auch die Hauptabluftleitung 6 angeschlossen, an die über eine Luftzusammenführungseinheit 7, welche auch als Luftsammelkasten 7 bezeichnet werden kann, mehrere Teilabluftleitungen 8a-8c angeschlossen sind, die auch als Teilluftleitungen für Abluft 8a-8c bezeichnet werden können.

Als Variante kann auch der Luftverteilkasten 4 und bzw. oder der Luftsammelkasten 7 entfallen. Dann erfolgt ein direkter Anschluss der Teilzuluftleitungen 5a-5c an die dann durchlaufende Hauptzuluftleitung 3. Ebenso kann auch bei Wegfall des Luftsammelkastens 7 ein direkter Anschluss der Teilabluftleitungen 8a-8c an die dann durchlaufendende Hauptabluftleitung 6 erfolgen.

In jedem Fall führen die Teilzuluftleitungen 5a-5c in Räume 14a-14c, welche entsprechend als Zulufträume 14a-14c bezeichnet werden können. Die Teilzuluftleitungen 5a-5c leiten dabei die Zuluft jeweils über Zuluftauslässe 19a-19c in die Räume 14a-14c ein. Entsprechend führen die Teilabluftleitungen 8a-c von Räumen 15a-15c weg, welche als Ablufträume 15a-15c bezeichnet werden können. Die Teilabluftleitungen 8a-8c nehmen dabei die Abluft jeweils über Ablufteinlässe 20a-20c aus den Räumen 15a-15c auf. Die Überleitung der Luft aus den Zulufträumen 14a-14c zu den Ablufträumen 15a-15c erfolgt durch Überströmöffnungen 16a-16f zwischen den Räumen 14a-14c, 15a-15c wie z.B. über Flure des Gebäudes.

In den Teilzuluftleitungen 5a-5c und in den Teilabluftleitungen 8a-8c befinden sich jeweils einzelne Drosselelemente 9a-9f mit stetigem Antrieb. Der stetige Antrieb kann als elektromechanischer, pneumatischer oder elektrothermischer Antrieb ausgeführt sein. Angesteuert werden die stetigen Stellantriebe der Drosselelemente 9a-9f durch die erfindungsgemäße Regelungseinheit 10, wie weiter unten näher erläutert werden wird.

Es ist ein Druckaufnehmer 11b vorgesehen, der den Ist-Wert des Luftdrucks in der Hauptzuluftleitung 3 sensorisch erfassen kann. Der Druckaufnehmer 11b ist dabei ausgebildet, den Ist-Wert des Luftdrucks in der Hauptzuluftleitung 3 als Differenzdruck gegenüber der Umgebung der Hauptzuluftleitung 3 sensorisch zu erfassen. Dies gilt ebenso für einen Druckaufnehmer 11a, der vorgesehen ist, den Ist-Wert des Luftdrucks in der Hauptabluftleitung 6 sensorisch zu erfassen.

Zur sensorischen Erfassung von zu regelnden Zustände der Raumluft in den Räumen 14a-14c, 15a-15c sind in den Zulufträumen 14a-14c jeweils ein Belastungssensor 12a-12c des CO₂-Gehalts vorgesehen, welche auch als Sensoren für CO₂-Konzentration 12a-12c bezeichnet werden können. In den Ablufträumen 15a-15c sind entsprechend Belastungssensoren 13a-13c der Luftfeuchte vorgesehen, welche auch als Sensoren für Luftfeuchte 13a-13c bezeichnet werden können. Die Belastungssensoren 13a-13c der Luftfeuchte der Ablufträume 15a-15c können alternativ auch in den zugehörigen Teilabluftleitungen 8a-8c angeordnet werden.

Zwischen dem Druckaufnehmer 11b der Hauptzuluftleitung 3, dem Druckaufnehmer 11a der Hauptabluftleitung 6, den Belastungssensoren 12a-12c des CO₂-Gehalts der Zulufträume 14a-14c, den Belastungssensoren 13a-13c der Luftfeuchte der Ablufträume 15a-15c sowie der Regelungseinheit 10 besteht eine Datenverbindung 17, welche teilweise oder vollständig drahtgebunden als Datenleitung 17 und bzw. oder drahtlos als Funkstrecke 17, d.h. als Kabel- und bzw. oder Funkverbindung 17, umgesetzt sein kann. Derartige Funkverbindungen 17 können beispielsweise über WLAN, Bluetooth und dergleichen umgesetzt werden.

Gemäß einem zweiten Ausführungsbeispiel der erfindungsgemäßen Regelungseinheit 10 besteht auch zwischen der Regelungseinheit 10 und dem Lüftungsgerät 1 bzw. dessen zentraler Regelungs- und Steuereinheit 2 eine drahtgebundene und bzw. oder drahtlose Datenverbindung 28, so dass der Betrieb des Zuluftventilators 1d und bzw. oder des Abluftventilators 1g von der Regelungseinheit 10 beeinflusst werden kann, wie weiter unten noch näher erläutert werden wird.

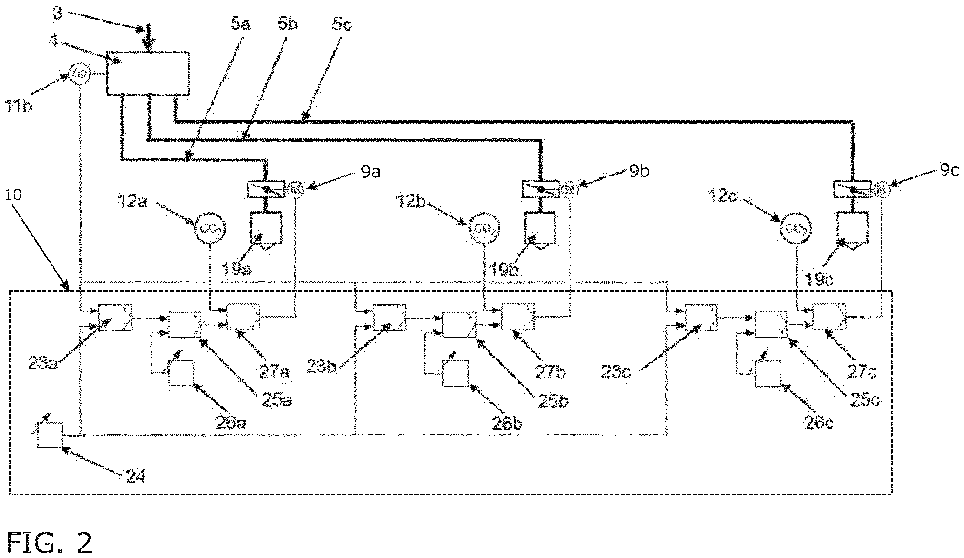

Fig. 2 zeigt eine schematische Detailsdarstellung der erfindungsgemäßen Regelungseinheit 10 gemäß einem ersten Ausführungsbeispiel, deren Funktion und Wirkungsweise am Beispiel der Zuluftseite der erfindungsgemäßen Lüftungsanlage 0 und den entsprechenden drei Zulufträumen 14a-14c, vgl. Fig. 1, beschrieben wird.

In dem ersten Zuluftraum 14a endet die erste Teilzuluftleitung 5a mit dem ersten Zuluftauslass 19a, der das erste Drosselelement 9a aufweist. Der erste Zuluftraum 14a weist den ersten Belastungssensor 12a des CO₂-Gehalts auf. In dem zweiten Zuluftraum 14b endet die zweite Teilzuluftleitung 5b mit dem zweiten Zuluftauslass 19b, der das zweite Drosselelement 9b aufweist. Der zweite Zuluftraum 14b weist den zweiten Belastungssensor 12b des CO₂-Gehalts auf. In dem dritten Zuluftraum 14c endet die dritte Teilzuluftleitung 5c mit dem dritten Zuluftauslass 19c, der das dritte Drosselelement 9c aufweist. Der dritte Zuluftraum 14c weist den dritten Belastungssensor 12c des CO₂-Gehalts auf.

Die Regelungseinheit 10 weist einen ersten Luftdruckregler 23a, welcher auch als erster Regler Differenzdruck 23a bezeichnet werden kann. Dem ersten Luftdruckregler 23a werden als Führungsgröße der Soll-Wert des Luftdrucks der Hauptzuluftleitung 3 als Differenzdruck von einem Luftdruck-Sollwertgeber 24 zugeführt, welcher auch als Sollwertgeber Differenzdruck 24 bezeichnet werden kann. Ferner wird dem ersten Luftdruckregler 23a als Regelgröße der zuvor bereits beschriebene Ist-Wert des Luftdrucks der Hauptzuluftleitung 3 als Differenzdruck zugeführt. Basierend auf dem Soll-Wert des Luftdrucks und dem Ist-Wert des Luftdrucks erzeugt der erste Luftdruckregler 23a eine erste Luftdruckstellgröße des ersten Zuluftraums 14a als seine Ausgangsgröße bzw. Stellgröße.

Die Regelungseinheit 10 weist ferner einen ersten Luftbelastungsführungsregler 25a auf, welcher auch als erster Führungsregler Raumlast 25a bezeichnet werden kann. Dem ersten Luftbelastungsführungsregler 25a werden als Führungsgröße ein erster Soll-Wert der Luftbelastung des ersten Zuluftraums 14a von einem ersten Luftbelastung-Sollwertgeber 26a zugeführt, welcher auch als Sollwertgeber Raumlast 25a bezeichnet werden kann. Ferner wird dem ersten Luftbelastungsführungsregler 25a als Regelgröße die zuvor erzeugte erste Luftdruckstellgröße des ersten Luftdruckreglers 23a zugeführt. Basierend auf dem ersten Soll-Wert der Luftbelastung und der ersten Luftdruckstellgröße erzeugt der erste Luftbelastungsführungsregler 25a eine erste Luftbelastungsstellgröße des ersten Zuluftraums 14a als seine Ausgangsgröße bzw. Stellgröße.

Die Regelungseinheit 10 weist des Weiteren einen ersten Luftbelastungsregler 27a auf, welcher auch als erster Regler Raumlast 27a bezeichnet werden kann. Dem ersten Luftbelastungsregler 27a wird als Führungsgröße die zuvor erzeugte erste Luftbelastungsstellgröße von dem ersten Luftbelastungsführungsregler 25a zugeführt. Ferner wird dem ersten Luftbelastungsregler 27a als Regelgröße der zuvor bereits beschriebene erste Ist-Wert der Luftbelastung des ersten Zuluftraums 14a als dessen CO₂-Gehalt zugeführt. Basierend auf der ersten Luftbelastungsstellgröße und dem ersten Ist-Wert der Luftbelastung erzeugt der erste Luftbelastungsregler 27a eine erste Druckstellgröße des ersten Zuluftraums 14a als seine Ausgangsgröße bzw. Stellgröße.

Dies gilt entsprechend für den zweiten Raum 14b als zweiten Zuluftraum 14b, dem seitens der Regelungseinheit 10 ein zweiter Luftdruckregler 23b zugeordnet ist, um basierend auf dem Soll-Wert des Luftdrucks und dem Ist-Wert des Luftdrucks eine zweite Luftdruckstellgröße zu erzeugen. Ggfs. kann anstelle der zweiten Luftdruckstellgröße auch die erste Luftdruckstellgröße an dieser Stelle verwendet werden.

Ferner weist die Regelungseinheit 10 einen zweiten Luftbelastungsführungsregler 25b auf, welcher ausgebildet ist, basierend auf einem zweiten Soll-Wert der Luftbelastung, welcher von einem zweiten Luftbelastung-Sollwertgeber 26b zur Verfügung gestellt wird, und der zweiten Luftdruckstellgröße eine zweite Luftbelastungsstellgröße als seine Ausgangsgröße bzw. Stellgröße zu erzeugen. Des Weiteren weist die Regelungseinheit 10 einen zweiten Luftbelastungsregler 27b auf, welcher ausgebildet ist, basierend auf der zweiten Luftbelastungsstellgröße und dem zweiten Ist-Wert der Luftbelastung des zweiten Zuluftraums 14b eine zweite Druckstellgröße des zweiten Zuluftraums 14b als seine Ausgangsgröße bzw. Stellgröße zu erzeugen. Dies gilt analog für den dritten Raum 14c als dritten Zuluftraum 14c.

Die Soll-Werte der Luftbelastung der jeweiligen Zulufträume 14a-14c entsprechen dabei der jeweils zulässigen maximalen Belastung der Raumluft durch CO₂. Diese Soll-Werte können für alle Zulufträume 14a-14c identisch oder unterschiedlich sein. Die entsprechenden Ist-Werte können von den zuvor bereits beschriebenen Belastungssensoren 12a-12c des CO₂-Gehalts der Zulufträume 14a-14c erfasst und der Regelungseinheit 10 zur Verfügung gestellt werden.

Werden nun seitens der Regelungseinheit 10 die drei Druckstellgrößen für die drei Zulufträume 14a-14c wie zuvor beschrieben erzeugt, so steuern die drei Druckstellgrößen die stetigen Antriebe der Drosselelemente 9a-9c der Zulufträume 14a-14c entsprechend an. Über den Grad der Offenstellung der Drosselelemente 9a-9c wird das Maß der Zuluftzufuhr, d.h. der Volumenstrom der Zuluft, in den jeweiligen Zuluftraum 14a-14c in Abhängigkeit der jeweiligen Druckstellgröße verändert. Gleichzeitig wird dem herrschenden Differenzdruck das Einstellen eines entsprechenden Luftvolumenstroms für jeden Zuluftraum 14a-14c ermöglicht, der für den Abtransport der jeweiligen Raumbelastung beispielsweise als CO₂ sorgt.

Wird beispielsweise über den Belastungssensor 12a des ersten Zuluftraums 14a eine Überschreitung des über den ersten Luftbelastungs-Sollwertgeber 26a eingestellten Höchstwert der zulässigen CO₂-Konzentration des ersten Zuluftraums 14a als erster Ist-Wert der Luftbelastung erfasst, so erhöht der erste Luftbelastungsregler 27a die erste Druckstellgröße als seine Stellgröße. Entsprechend wird über den stetigen Antrieb des ersten Drosselelements 9a dessen Offenstellung erhöht und damit auch das Maß der Zuluftzufuhr in den ersten Zuluftraum 14a. Durch die Erhöhung der Offenstellung des ersten Drosselelements 9a erhöht sich somit auch der Luftvolumenstrom in den ersten Zuluftraum 14a.

Da alle drei Teilzuluftleitungen 5a-5c gemeinsam der Hauptzuluftleitung 3 entspringen, hat eine Erhöhung des Luftvolumenstroms in den ersten Zuluftraum 14a ein Absinken des Differenzdrucks der Hauptzuluftleitung 3 zur Folge. Das Absinken des Differenzdrucks der Hauptzuluftleitung 3 wird durch den Druckaufnehmer 11b der Hauptzuluftleitung 3 erfasst und jeweils als Regelgröße auf die drei Luftdruckregler 23a-23c gegeben. Da die Druckstellgrößen der drei Luftdruckregler 23a-23c als Regelgrößen für die drei entsprechenden Luftbelastungsführungsregler 25a-25c dienen, wirkt das Absinken des Differenzdrucks der Hauptzuluftleitung 3 als Sollwert mittelbar über die drei Luftbelastungsstellgrößen auf den jeweiligen Luftbelastungsregler 27a-27c. Die Veränderung der Sollwerte der drei Luftbelastungsregler 27a-c in Abhängigkeit des Differenzdrucks der Hauptzuluftleitung 3 führt über die drei Druckstellgrößen jeweils zu einer Verringerung der Offenstellung der drei Drosselelemente 9a-9c.

Dabei führt die Verringerung der Offenstellung der beiden Drosselelemente 9b-9c des zweiten und dritten Zuluftraums 14b, 14c zu einer Verringerung dieser beiden Luftvolumenströme durch die einzelnen Teilzuluftleitungen 5b-5c, wodurch der Differenzdruck der Hauptzuluftleitung 3 wieder auf den vorangehenden Wert steigt.

Für den ersten Zuluftraum 14a jedoch führt dieser Regelungsvorgang bei dem ersten Drosselelement 9a zu einer lediglich teilweisen Rückstellung der durch den Anstieg der CO₂-Konzentration bewirkten erhöhten Offenstellung des ersten Drosselelements 9a. Im Unterschied zu den beiden Drosselelementen 9b, 9c des zweiten und dritten Zuluftraums 14b, 14c, die keine erhöhte CO₂-Konzentration aufweisen, kommt es bei dem ersten Drosselelement 9a aufgrund der erhöhten auszugleichenden CO₂-Konzentration des ersten Zuluftraums 14a zu einem gegenläufigen Verstellvorgang des ersten Drosselelements 9a, da hier zwar auch von dem ersten Luftdruckregler 23a dem Absinken des Differenzdrucks der Hauptzuluftleitung 3 durch ein Verringern des Luftvolumenstroms entgegengewirkt werden soll, der erhöhte erste Ist-Wert der CO₂-Konzentration jedoch den Luftbelastungsregler 27a dazu veranlasst, den Luftvolumenstrom durch eine Erhöhung der Offenstellung des ersten Drosselelements 9a zu erhöhen. Durch diesen gegenläufigen Verstellvorgang des ersten Drosselelements 9a kann eine Differenz der Offenstellungen der drei Drosselelemente 9a-9c erhalten bleiben, so dass das erste Drosselelements 9a des ersten Zuluftraums 14a eine größere Offenstellung als die beiden Drosselelemente 9b, 9c des zweiten und dritten Zuluftraums 14b, 14c aufweist.

Mit anderen Worten wird durch die gegenläufige Verstellung der Offenstellung des ersten Drosselelements 9a gegenüber dem zweiten und dritten Drosselelement 9b, 9c der Teilzuluftvolumenstrom durch die erste Teilzuluftleitung 5a erhöht. Gleichzeitig kommt es zu einer Verringerung der Teilzuluftvolumenströme durch die zweite und dritte Teilzuluftleitung 5b, 5c.

Hierdurch kann ein größerer Luftvolumenstrom in den ersten Zuluftraum14a erreicht werden, um den dort erhöhten CO₂-Gehalt zu reduzieren. Gleichzeitig kann der Gesamtvolumenstrom der Hauptzuluftleitung 3 konstant gehalten werden, da die Luftvolumenströme der beiden Drosselelemente 9b, 9c des zweiten und dritten Zuluftraums 14b, 14c entsprechend verringert werden.

Dabei können die Stellungen der drei Drosselelemente 9a-9c indirekt zueinander geregelt werden, da jeweils eine Regelung auf den Differenzdruck der Hauptzuluftleitung 3 als gemeinsame Regelgröße erfolgt. Dies kann eine einfache und dennoch wirkungsvolle Regelung der Teilzuluftvolumenströme zueinander wie zuvor beschrieben ermöglichen.

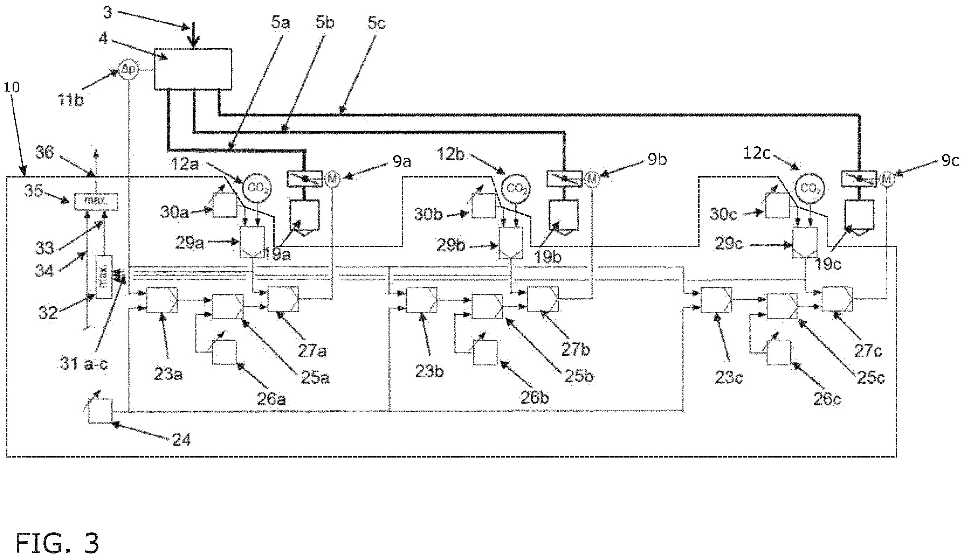

Fig. 3 zeigt eine schematische Detaildarstellung einer erfindungsgemäßen Regelungseinheit 10 gemäß einem zweiten Ausführungsbeispiel. Die Regelungseinheit 10 gemäß dem zweiten Ausführungsbeispiel entspricht grundsätzlich der Regelungseinheit 10 gemäß dem ersten Ausführungsbeispiel. Ergänzend ist in diesem Fall, wie zuvor bereits erwähnt, die Datenverbindung 28 zwischen der Regelungseinheit 10 und dem Lüftungsgerät 1 bzw. dessen zentraler Regelungs- und Steuereinheit 2 vorgesehen. Auch weist die Regelungseinheit 10 selbst weitere Elemente wie folgt auf.

Es ist ein erster Luftbelastungssollwertgeber 30a vorgesehen, der auch als erster Sollwertregler Raumlast 29a bezeichnet werden kann. Von dem Luftbelastungssollwertgeber 30a wird ein erster Soll-Wert einer Maximalluftbelastung des ersten Zuluftraums 14a der Lüftungsanlage 1 vorgesehen, welcher eine maximal zulässige CO₂-Belastung des ersten Zuluftraums 14a repräsentiert. Der Wert des ersten Soll-Werts der Maximalluftbelastung des ersten Zuluftraums 14a liegt dabei signifikant oberhalb des ersten Soll-Werts der Luftbelastung des ersten Zuluftraums 14a, so dass bei Erreichen oder Überschreiten des ersten Soll-Werts der Maximalluftbelastung des ersten Zuluftraums 14a erkannt werden kann, dass die anhand des ersten Ausführungsbeispiels beschriebene Maßnahme der Umverteilung des konstanten Volumenstroms der Hauptzuluftleitung 3 zwischen den Zulufträumen 14a-14c nicht ausreichend ist, der erhöhten CO₂-Belastung des ersten Zuluftraums 14a entgegenzuwirken. Dies wird erfindungsgemäß mittels der Regelungseinheit 10 des zweiten Ausführungsbeispiels wie folgt umgesetzt.

Der erste Soll-Wert der Maximalluftbelastung des ersten Zuluftraums 14a wird gemeinsam mit dem zuvor bereits beschriebenen ersten Ist-Wert der Luftbelastung des ersten Zuluftraums 14a einem ersten Luftbelastungssollwertregler 29a zugeführt, der basierend auf dem ersten Soll-Wert der Maximalluftbelastung und dem ersten Ist-Wert der Luftbelastung einen ersten Luftbelastungsmaximalwert erzeugt. Der erste Luftbelastungsmaximalwert wird zum einen anstelle des ersten Ist-Werts der Luftbelastung als Regelgröße dem ersten Luftbelastungsregler 27a zugeführt, so dass gemäß dem zweiten Ausführungsbeispiel die erste Druckstellgröße des ersten Luftbelastungsreglers 27a indirekt auf dem ersten Ist-Wert der Luftbelastung beruht. Ferner wird der erste Luftbelastungsmaximalwert als Ausgangsgröße des ersten Luftbelastungssollwertreglers 29a zusätzlich einem Maximalwertermittler 32 als erstes Luftbelastungssollwertsignal 31a zugeführt.

Parallel weist der zweite Zuluftraum 14b einen zweiten Luftbelastungssollwertgeber 30b und einen zweiten Luftbelastungssollwertregler 29b auf, der basierend auf einem zweiten Soll-Wert der Maximalluftbelastung des zweiten Zuluftraums 14b und dem zweiten Ist-Wert der Luftbelastung einen zweiten Luftbelastungsmaximalwert erzeugt, welcher als zweites Luftbelastungssollwertsignal 31b dem Maximalwertermittler 32 zugeführt wird. Ebenso weist der dritte Zuluftraum 14c einen dritten Luftbelastungssollwertgeber 30c und einen dritten Luftbelastungssollwertregler 29c auf, der basierend auf einem dritten Soll-Wert der Maximalluftbelastung des dritten Zuluftraums 14c und dem dritten Ist-Wert der Luftbelastung einen dritten Luftbelastungsmaximalwert erzeugt, welcher als drittes Luftbelastungssollwertsignal 31c dem Maximalwertermittler 32 zugeführt wird.

Der Maximalwertermittler 32 ermittelt nun aus den drei Luftbelastungssollwertsignalen 31a-31c den größten Luftbelastungsmaximalwert aller drei Zulufträume 14a-14c und stellt diesen als Maximalwertsignal Zuluft 33 einer Volumenstromsteuerung 35 zur Verfügung. Parallel wird auf dieselbe Art und Weise ein größter Luftbelastungsmaximalwert mehrerer Ablufträume 15a-15c ermittelt und als Maximalwertsignal Abluft 34 der Volumenstromsteuerung 35 zur Verfügung gestellt. Die Volumenstromsteuerung 35 ermittelt nun aus dem ermittelten größten Luftbelastungsmaximalwert der Zuluft und dem ermittelten größten Luftbelastungsmaximalwert der Abluft, d.h. aus dem Wert des Maximalwertsignals Zuluft 33 und aus dem Wert des Maximalwertsignals Abluft 34, den größten dieser beiden Werte.

Basierend auf dem größten dieser beiden Werte, welcher im betrachteten Beispiel die Zuluftseite ist, erzeugt die Volumenstromsteuerung 35 dann ein Steuerungssignal als Sollwertsignal 36 des Volumenstroms der Zuluft und der Abluft, welches über die Datenverbindung 28 an die zentrale Regelungs- und Steuereinheit 2 des Lüftungsgeräts 1 übermittelt wird. Basierend auf dem Sollwertsignal 36 des Volumenstroms der Zuluft und der Abluft kann nun der Zuluftventilator 1d der Hauptzuluftleitung 3 und der Abluftventilator 1g der Hauptabluftleitung 6 von der zentralen Regelungs- und Steuereinheit 2 des Lüftungsgeräts 1 so betrieben werden, dass der Sollwert des jeweiligen Volumenstroms erreicht wird. Gleichzeitig können hierdurch ausgewogene Druckverhältnisse zwischen der Zuluftseite, d.h. den Zulufträumen 14a-14c, und der Abluftseite, d.h. den Ablufträumen 15a-15c, gewährleistet werden.

Im betrachteten Beispiel einer erhöhten CO₂-Belastung des ersten Zuluftraums 14a wird somit ein ausreichend großer Volumenstrom der Zuluft erzeugt, um der erhöhten CO₂-Belastung des ersten Zuluftraums 14a entgegenwirken zu können. Die Aufteilung des Volumenstroms der Hauptzuluftleitung 3 auf die einzelnen Zulufträume 14a-14c erfolgt dabei wie anhand des ersten Ausführungsbeispiels beschrieben, so dass der zusätzliche Volumenstrom auch in den ersten Zuluftraum 14a gelangt. Sinkt hierdurch die CO₂-Belastung des ersten Zuluftraums 14a wieder unter den ersten Soll-Wert der Maximalluftbelastung des ersten Zuluftraums 14a, so kann der Volumenstrom der Hauptzuluftleitung 3 wieder reduziert werden. Die verbleibende erhöhte CO₂-Belastung des ersten Zuluftraums 14a kann durch die Wirkungsweise des ersten Ausführungsbeispiels reduziert werden.

Die zuvor beschriebene Wirkungsweise der Erhöhung des Volumenstroms der Hauptzuluftleitung 3 basierend auf einer erhöhten CO₂-Belastung des ersten Zuluftraums 14a kann ebenso angewendet werden, um eine erhöhte Belastung an Luftfeuchtigkeit eines Abluftraums 15a-15c zu reduzieren.

### BEZUGSZEICHENLISTE (Teil der Beschreibung)

- 0: Lüftungsanlage; KWL-Anlagen
- 1: (vorgelagertes, zentrales) Lüftungsgerät
- 1a: Zuluftfilter; Außenluftfilter
- 1b: Vorerhitzer
- 1c: Plattentauscher
- 1d: Zuluftventilator; Außenluftventilator
- 1e: Bypassklappe
- 1f: Abluftfilter
- 1g: Abluftventilator; Fortluftventilator
- 2: (zentrale) Regelungs- und Steuereinheit
- 3: Hauptzuluftleitung
- 4: Luftverteilereinheit; Luftverteilkasten
- 5a - 5c: Teilzuluftleitungen; Teilluftleitungen für Zuluft
- 6: Hauptabluftleitung
- 7: Luftzusammenführungseinheit; Luftsammelkasten
- 8a - 8c: Teilabluftleitungen; Teilluftleitungen für Abluft
- 9a -9c: Drosselelemente der Teilzuluftleitungen 5a-5c
- 9d - 9f: Drosselelemente der Teilabluftleitungen 8a-8c
- 10: Regelungseinheit; Regel- und Steuereinheit
- 11a: Druckaufnehmer der Hauptabluftleitung 6; Drucksensor; Differenzdrucksensor
- 11b: Druckaufnehmer der Hauptzuluftleitung 3; Drucksensor; Differenzdrucksensor
- 12a - 12c: Belastungssensoren; Sensoren für CO₂-Konzentration
- 13a - 13c: Belastungssensoren; Sensoren für Luftfeuchte
- 14a - 14c: Räume; Zulufträume
- 15a - 15c: Räume; Ablufträume
- 16a - 16f: Überströmöffnungen
- 17: Datenverbindung der Regelungseinheit 10; Datenleitung; Funkstrecke
- 19a - 19c: Zuluftauslässe
- 20a - 20c: Ablufteinlässe
- 21: Zuluftanschluss; Außenluftanschluss
- 22: Abluftanschluss; Fortluftanschluss
- 23a - 23c: Luftdruckregler; Regler Differenzdruck
- 24: Luftdruck-Sollwertgeber; Sollwertgeber Differenzdruck
- 25a - 25c: Luftbelastungsführungsregler; Führungsregler Raumlast
- 26a - 26c: Luftbelastung-Sollwertgeber; Sollwertgeber Raumlast
- 27a - 27c: Luftbelastungsregler; Regler Raumlast
- 28: Datenverbindung zwischen (zentraler) Regelungs- und Steuereinheit 2 und Regelungseinheit 10
- 29a - 29c: Luftbelastungssollwertregler; Sollwertregler Raumlast
- 30a - 30c: Luftbelastungssollwertgeber; Sollwertgeber Raumlast
- 31a - 31c: Luftbelastungssollwertsignale
- 32: Maximalwertermittler; Maximalwertauswahl der Zulufträume 14a - 14c oder der Ablufträume 15a - 15c
- 33: Maximalwertsignal Zuluft
- 34: Maximalwertsignal Abluft
- 35: Volumenstromsteuerung; Maximalwertauswahl des Gesamtluftvolumenstroms
- 36: Sollwertsignal des Volumenstroms der Zuluft und der Abluft bzw. des Gesamtluftvolumenstroms

## Patentansprüche

1. Regelungseinheit (10) für eine Lüftungsanlage (0), vorzugsweise für eine KWL-Anlage (0), welche ausgebildet ist zu erhalten
• einen Soll-Wert des Luftdrucks einer Hauptzuluftleitung (3) und/oder einer Hauptabluftleitung (6),
• einen Ist-Wert des Luftdrucks der Hauptzuluftleitung (3) und/oder der Hauptabluftleitung (6),
• einen ersten Soll-Wert einer Luftbelastung eines ersten Raums (14a; 15a) oder einer ersten Raumzone und
• einen ersten Ist-Wert der Luftbelastung des ersten Raums (14a; 15a) oder der ersten Raumzone,
mit einem ersten Luftdruckregler (23a), welcher ausgebildet ist, basierend auf dem Soll-Wert des Luftdrucks und dem Ist-Wert des Luftdrucks eine erste Luftdruckstellgröße zu erzeugen,
mit einem ersten Luftbelastungsführungsregler (25a), welcher ausgebildet ist, basierend auf dem ersten Soll-Wert der Luftbelastung und der ersten Luftdruckstellgröße eine erste Luftbelastungsstellgröße zu erzeugen, und
mit einem ersten Luftbelastungsregler (27a), welcher ausgebildet ist, basierend auf der ersten Luftbelastungsstellgröße und dem ersten Ist-Wert der Luftbelastung eine erste Druckstellgröße des ersten Raums (14a; 15a) oder der ersten Raumzone zu erzeugen,
wobei die Luftbelastung vorzugsweise eine CO₂-Konzentration oder eine Luftfeuchtigkeit ist,
wobei der Luftdruck vorzugsweise ein Differenzluftdruck ist.

2. Regelungseinheit (10) nach Anspruch 1, **dadurch gekennzeichnet, dass**
die Regelungseinheit (10) ferner ausgebildet ist zu erhalten
• einen zweiten Soll-Wert der Luftbelastung eines zweiten Raums (14b; 15b) oder einer zweiten Raumzone und
• einen zweiten Ist-Wert der Luftbelastung des zweiten Raums (14b; 15b) oder der zweiten Raumzone,
mit einem zweiten Luftdruckregler (23b), welcher ausgebildet ist, basierend auf dem Soll-Wert des Luftdrucks und dem Ist-Wert des Luftdrucks eine zweite Luftdruckstellgröße zu erzeugen,
mit einem zweiten Luftbelastungsführungsregler (25b), welcher ausgebildet ist, basierend auf dem zweiten Soll-Wert der Luftbelastung und der zweiten Luftdruckstellgröße eine zweite Luftbelastungsstellgröße zu erzeugen, und
mit einem zweiten Luftbelastungsregler (27b), welcher ausgebildet ist, basierend auf der zweiten Luftbelastungsstellgröße und dem zweiten Ist-Wert der Luftbelastung eine zweite Druckstellgröße des zweiten Raums (14b; 15b) oder der zweiten Raumzone zu erzeugen.

3. Regelungseinheit (10) nach Anspruch 1, **dadurch gekennzeichnet, dass** die Regelungseinheit (10) ferner ausgebildet ist zu erhalten
• einen zweiten Soll-Wert der Luftbelastung eines zweiten Raums (14b; 15b) oder einer zweiten Raumzone und
• einen zweiten Ist-Wert der Luftbelastung des zweiten Raums (14b; 15b) oder der zweiten Raumzone,
mit einem zweiten Luftbelastungsführungsregler (25b), welcher ausgebildet ist, basierend auf dem zweiten Soll-Wert der Luftbelastung und der ersten Luftdruckstellgröße eine zweite Luftbelastungsstellgröße zu erzeugen, und
mit einem zweiten Luftbelastungsregler (27b), welcher ausgebildet ist, basierend auf der zweiten Luftbelastungsstellgröße und dem zweiten Ist-Wert der Luftbelastung eine zweite Druckstellgröße des zweiten Raums (14b; 15b) oder der zweiten Raumzone zu erzeugen.

4. Regelungseinheit (10) nach einem der vorangehenden Ansprüche, **dadurch gekennzeichnet, dass**
die Regelungseinheit (10) ferner ausgebildet ist, den Betrieb eines Zuluftventilators (1d) der Hauptzuluftleitung (3) und/oder eines Abluftventilators (1g) der Hauptabluftleitung (6) in Abhängigkeit eines ersten Ist-Werts der Luftbelastung des ersten Raums (14a; 15a) oder der ersten Raumzone zu beeinflussen.

5. Regelungseinheit (10) nach Anspruch 4, **dadurch gekennzeichnet, dass** die Regelungseinheit (10) ferner ausgebildet ist zu erhalten:
• einen ersten Soll-Wert einer Maximalluftbelastung des ersten Raums (14a; 15a) oder der ersten Raumzone,
mit einem ersten Luftbelastungssollwertregler (29a), welcher ausgebildet ist, basierend auf dem ersten Soll-Wert der Maximalluftbelastung und dem ersten Ist-Wert der Luftbelastung einen ersten Luftbelastungsmaximalwert zu erzeugen, und
mit einer Volumenstromsteuerung (35), welche ausgebildet ist, basierend auf dem ersten Luftbelastungsmaximalwert ein Steuerungssignal für den Zuluftventilator (1d) der Hauptzuluftleitung (3) und/oder für den Abluftventilator (1g) der Hauptabluftleitung (6) zu erzeugen,
wobei vorzugsweise der erste Luftbelastungsregler (27a) ausgebildet ist, basierend auf der ersten Luftbelastungsstellgröße und dem ersten Luftbelastungsmaximalwert die erste Druckstellgröße des ersten Raums (14a; 15a) oder der ersten Raumzone zu erzeugen.

6. Regelungseinheit (10) nach Anspruch 5, **gekennzeichnet durch**
einen Maximalwertermittler (32), welcher ausgebildet ist, aus dem ersten Luftbelastungsmaximalwert des ersten Raums (14a; 15a) oder der ersten Raumzone und einem zweiten Luftbelastungsmaximalwert eines zweiten Raums (14b; 15b) oder einer zweiten Raumzone den größten Luftbelastungsmaximalwert zu ermitteln und der Volumenstromsteuerung (35) zur Verfügung zu stellen.

7. Regelungseinheit (10) nach Anspruch 5 oder 6, **dadurch gekennzeichnet, dass**
die Volumenstromsteuerung (35) ferner ausgebildet ist, aus dem ersten Luftbelastungsmaximalwert eines ersten Zuluftraums (14a) oder einer ersten Zuluftraumzone, vorzugsweise aus dem ermittelten größten Luftbelastungsmaximalwert der Zuluft, und aus einem ersten Luftbelastungsmaximalwert eines ersten Abluftraums (15a) oder einer ersten Abluftraumzone, vorzugsweise aus einem ermittelten größten Luftbelastungsmaximalwert der Abluft, den größten ersten Luftbelastungsmaximalwert, vorzugsweise den größten ermittelten größten Luftbelastungsmaximalwert, zu ermitteln und hierauf basierend das Steuerungssignal zu erzeugen.

8. Verfahren zum Betreiben einer Regelungseinheit (10) für eine Lüftungsanlage (0), vorzugsweise für eine KWL-Anlage (0), nach einem der vorangehenden Ansprüchen mit wenigstens den Schritten:
Erhalten eines Soll-Werts des Luftdrucks einer Hauptzuluftleitung (3) und/oder einer Hauptabluftleitung (6),
Erhalten eines Ist-Werts des Luftdrucks der Hauptzuluftleitung (3) und/oder der Hauptabluftleitung (6),
Erzeugen einer ersten Luftdruckstellgröße basierend auf dem Soll-Wert des Luftdrucks und dem Ist-Wert des Luftdrucks,
Erhalten eines ersten Soll-Werts einer Luftbelastung eines ersten Raums (14a; 15a) oder einer ersten Raumzone,
Erzeugen einer ersten Luftbelastungsstellgröße basierend auf dem ersten Soll-Wert der Luftbelastung und der ersten Luftdruckstellgröße,
Erhalten eines ersten Ist-Wert der Luftbelastung des ersten Raums (14a; 15a) oder der ersten Raumzone und
Erzeugen einer ersten Druckstellgröße basierend auf der ersten Luftbelastungsstellgröße und dem ersten Ist-Wert der Luftbelastung.

9. Verfahren nach Anspruch 8, ferner mit wenigstens den weiteren Schritten:
Erhalten eines zweiten Soll-Werts der Luftbelastung eines zweiten Raums oder einer zweiten Raumzone,
Erhalten eines zweiten Ist-Werts der Luftbelastung des zweiten Raums (14b; 15b) oder der zweiten Raumzone,
und entweder
Erzeugen einer zweiten Luftdruckstellgröße basierend auf dem Soll-Wert des Luftdrucks und dem Ist-Wert des Luftdrucks, und
Erzeugen einer zweiten Luftbelastungsstellgröße basierend auf dem zweiten Soll-Wert der Luftbelastung und der zweiten Luftdruckstellgröße,
oder
Erzeugen einer zweiten Luftbelastungsstellgröße basierend auf dem zweiten Soll-Wert der Luftbelastung und der ersten Luftdruckstellgröße, und
Erzeugen einer zweiten Druckstellgröße basierend auf der zweiten Luftbelastungsstellgröße und dem zweiten Ist-Wert der Luftbelastung.

10. Lüftungsanlage (0), vorzugsweise KWL-Anlage (0),
mit einer Hauptzuluftleitung (3), welche ausgebildet ist, Zuluft einer Mehrzahl von Teilzuluftleitungen (5a-5c) zuzuführen,
wobei die Teilzuluftleitungen (5a-5c) ausgebildet sind, die Zuluft einer Mehrzahl von Räumen (14a-14c) oder Raumzonen zuzuführen,
wobei eine erste Teilzuluftleitung (5a) ein erstes Drosselelement (9a), vorzugsweise mit stetigem Antrieb, aufweist, welches ausgebildet ist, das Maß der Zuluftzufuhr in einen ersten Raum (14a) zu verändern,
mit einem Druckaufnehmer (11b), welcher ausgebildet ist, einen Ist-Wert des Luftdrucks der Hauptzuluftleitung (3) zu erfassen,
mit einem Luftdruck-Sollwertgeber (24), welcher ausgebildet ist, einen Soll-Wert des Luftdrucks der Hauptzuluftleitung (3) auszugeben,
mit einem ersten Belastungssensor (12a), welcher ausgebildet ist, einen ersten Ist-Wert einer Luftbelastung des ersten Raums (14a) oder einer ersten Raumzone zu erfassen,
mit einem ersten Luftbelastung-Sollwertgeber (26a), welcher ausgebildet ist, einen ersten Soll-Wert der Luftbelastung des ersten Raums (14a) oder der ersten Raumzone auszugeben, und
mit einer Regelungseinheit (10) nach einem der Ansprüche 1 bis 7,
wobei das erste Drosselelement (9a) der ersten Teilzuluftleitung (5a) ausgebildet ist, das Maß der Zuluftzufuhr in den ersten Raum (14a) basierend auf der ersten Druckstellgröße zu verändern,
wobei vorzugsweise der erste Belastungssensor (12a) ausgebildet ist, den ersten Ist-Wert der Luftbelastung als CO₂-Konzentration zu erfassen,
wobei vorzugsweise der Druckaufnehmer (11b) ausgebildet ist, den Ist-Wert des Luftdrucks der Hauptzuluftleitung (3) als Differenzluftdruck zu erfassen.

11. Lüftungsanlage (0) nach Anspruch 10, **dadurch gekennzeichnet, dass**
eine zweite Teilzuluftleitung (5b) ein zweites Drosselelement (9b) aufweist, welches ausgebildet ist, das Maß der Zuluftzufuhr in einen zweiten Raum (14b) zu verändern,
ferner mit einem zweiten Belastungssensor (12b), welcher ausgebildet ist, einen zweiten Ist-Wert der Luftbelastung eines zweiten Raums (14b) oder einer zweiten Raumzone zu erfassen, und
mit einem zweiten Luftbelastung-Sollwertgeber (26b), welcher ausgebildet ist, einen zweiten Soll-Wert der Luftbelastung des zweiten Raums (14b) oder der zweiten Raumzone auszugeben,
wobei das zweite Drosselelement (9b) der zweiten Teilzuluftleitung (5b) ausgebildet ist, das Maß der Zuluftzufuhr in den zweiten Raum (14b) basierend auf der zweiten Druckstellgröße zu verändern,
wobei vorzugsweise der zweite Belastungssensor (12b) ausgebildet ist, den zweiten Ist-Wert der Luftbelastung als CO₂-Konzentration zu erfassen.

12. Lüftungsanlage (0), vorzugsweise KWL-Anlage (0),
mit einer Hauptabluftleitung (6), welche ausgebildet ist, Abluft von einer Mehrzahl von Teilabluftleitungen (8a-8c) zugeführt zu bekommen,
wobei die Teilabluftleitungen (8a-8c) ausgebildet sind, die Abluft einer Mehrzahl von Räumen (15a-15c) oder Raumzonen zugeführt zu bekommen,
wobei eine erste Teilabluftleitung (8a) ein erstes Drosselelement (9d), vorzugsweise mit stetigem Antrieb, aufweist, welches ausgebildet ist, das Maß der Abluftabfuhr aus einem ersten Raum (15a) zu verändern,
mit einem Druckaufnehmer (11a), welcher ausgebildet ist, einen Ist-Wert des Luftdrucks der Hauptabluftleitung (6) zu erfassen,
mit einem Luftdruck-Sollwertgeber (24), welcher ausgebildet ist, einen Soll-Wert des Luftdrucks der Hauptabluftleitung (6) auszugeben,
mit einem ersten Belastungssensor (13a), welcher ausgebildet ist, einen ersten Ist-Wert einer Luftbelastung eines ersten Raums (15a) oder einer ersten Raumzone zu erfassen,
mit einem ersten Luftbelastung-Sollwertgeber (26a), welcher ausgebildet ist, einen ersten Soll-Wert der Luftbelastung des ersten Raums (15a) oder der ersten Raumzone auszugeben, und
mit einer Regelungseinheit (10) nach einem der Ansprüche 1 bis 7,
wobei das erste Drosselelement (9d) der ersten Teilabluftleitung (8a) ausgebildet ist, das Maß der Abluftabfuhr aus dem ersten Raum (15a) basierend auf der ersten Druckstellgröße zu verändern,
wobei vorzugsweise der erste Belastungssensor (13a) ausgebildet ist, den ersten Ist-Wert der Luftbelastung als Luftfeuchtigkeit zu erfassen,
wobei vorzugsweise der Druckaufnehmer (11a) ausgebildet ist, den Ist-Wert des Luftdrucks der Hauptabluftleitung (6) als Differenzluftdruck zu erfassen.

13. Lüftungsanlage (0) nach Anspruch 12, **dadurch gekennzeichnet, dass**
eine zweite Teilabluftleitung (8b) ein zweites Drosselelement (9e) aufweist, welches ausgebildet ist, das Maß der Abluftabfuhr aus einem zweiten Raum (15b) zu verändern,
ferner mit einem zweiten Belastungssensor (13b), welcher ausgebildet ist, einen zweiten Ist-Wert der Luftbelastung des zweiten Raums (15b) oder einer zweiten Raumzone zu erfassen, und
mit einem zweiten Luftbelastung-Sollwertgeber (26b), welcher ausgebildet ist, einen zweiten Soll-Wert der Luftbelastung des zweiten Raums (15b) oder der zweiten Raumzone auszugeben,
wobei das zweite Drosselelement (9e) der zweiten Teilabluftleitung (8b) ausgebildet ist, das Maß der Abluftabfuhr aus dem zweiten Raum (15b) basierend auf der zweiten Druckstellgröße zu verändern,
wobei vorzugsweise der zweite Belastungssensor (13b) ausgebildet ist, den zweiten Ist-Wert der Luftbelastung als Luftfeuchtigkeit zu erfassen.

14. Verfahren zum Betreiben einer Lüftungsanlage (0), vorzugsweise einer KWL-Anlage (0), nach einem der Ansprüchen 8 bis 13, mit wenigstens den Schritten:
Ausgeben eines Soll-Werts des Luftdrucks einer Hauptzuluftleitung (3) und/oder einer Hauptabluftleitung (6),
Erfassen eines Ist-Werts des Luftdrucks der Hauptzuluftleitung (3) und/oder der Hauptabluftleitung (6),
Erzeugen einer ersten Luftdruckstellgröße basierend auf dem Soll-Wert des Luftdrucks und dem Ist-Wert des Luftdrucks,
Ausgeben eines ersten Soll-Werts einer Luftbelastung eines ersten Raums (14a; 15a) oder einer ersten Raumzone,
Erzeugen einer ersten Luftbelastungsstellgröße basierend auf dem ersten Soll-Wert der Luftbelastung und der ersten Luftdruckstellgröße,
Erfassen eines ersten Ist-Werts der Luftbelastung des ersten Raums (14a; 15a) oder der ersten Raumzone und
Erzeugen einer ersten Druckstellgröße basierend auf der ersten Luftbelastungsstellgröße und dem ersten Ist-Wert einer Luftbelastung.

15. Verfahren nach Anspruch 14, ferner mit wenigstens den weiteren Schritten:
Ausgeben eines zweiten Soll-Werts der Luftbelastung eines zweiten Raums (14b; 15b) oder einer zweiten Raumzone,
Erfassen eines zweiten Ist-Werts der Luftbelastung des zweiten Raums (14b; 15b) oder der zweiten Raumzone,
und entweder
Erzeugen einer zweiten Luftdruckstellgröße basierend auf dem Soll-Wert des Luftdrucks und dem Ist-Wert des Luftdrucks, und
Erzeugen einer zweiten Luftbelastungsstellgröße basierend auf dem zweiten Soll-Wert der Luftbelastung und der zweiten Luftdruckstellgröße, oder
Erzeugen einer zweiten Luftbelastungsstellgröße basierend auf dem zweiten Soll-Wert der Luftbelastung und der ersten Luftdruckstellgröße, und
Erzeugen einer zweiten Druckstellgröße basierend auf der zweiten Luftbelastungsstellgröße und dem zweiten Ist-Wert der Luftbelastung.

16. Computerprogrammprodukt mit einem Programmcode, welcher auf einem von einem Computer lesbaren Medium gespeichert ist, zur Ausführung eines Verfahrens nach einem der Ansprüche 8, 9, 14 oder 15.
